# EUROPEAN PATENT SPECIFICATION

(11) **EP 3 580 290 B1**
(45) Date of publication and mention of the grant of the patent: **01.05.2024**
(21) Application number: 18706132.0
(22) Date of filing: 07.02.2018
(51) Int. Cl.: C09D 175/00, C08G 18/58, C08G 18/80, C08G 18/32, C08G 18/76, C09D 5/44, C08G 18/20, C08G 18/22

(54) **LOW-TEMPERATURE CURING COATING COMPOSITIONS**
BEI NIEDRIGER TEMPERATUR HÄRTENDE BESCHICHTUNGSZUSAMMENSETZUNGEN
COMPOSITIONS DE REVÊTEMENT DURCISSANT À BASSE TEMPÉRATURE

(30) Priority: 07.02.2017 US 201762455778 P
(43) Date of publication of application: 18.12.2019
(73) Proprietor: PPG Industries Ohio, Inc., Cleveland, OH 44111 (US)
(72) Inventor: ESWARAKRISHNAN, Venkatachalam, Allison Park, Pennsylvania 15101 (US); ZHOU, Hongying, Allison Park, Pennsylvania 15101 (US); SANDALA, Michael G., Pittsburgh, Pennsylvania 15237 (US); NOVAK, Carolyn A.K., Gibsonia, Pennsylvania 15044 (US); BICE, Jo-Ann E., Allison Park, Pennsylvania 15101 (US); DACKO, Christopher A., Pittsburgh, Pennsylvania 15212 (US); RO, Hyun Wook, Gibsonia, Pennsylvania 15044 (US); SYPUT, Richard F., Lower Burrell, Pennsylvania 15068 (US); PUODZIUKYNAITE, Egle, Allison Park, Pennsylvania 15101 (US); WILSON, Craig A., Allison Park, Pennsylvania 15101 (US); JONES, Justin M., Cranberry Township, Pennsylvania 16066 (US); TILLMAN, Herbert, Pittsburgh, Pennsylvania 15221 (US)
(74) Representative: f & e patent
(86) International application number: PCT/US2018/017259
(87) International publication number: WO 2018/148306

(56) References cited:
- EP-A1- 0 118 743
- EP-A1- 2 821 428
- WO-A1-01/30880
- WO-A1-2014/004273
- US-A- 4 370 461
- US-A1- 2012 004 472
- US-B1- 6 602 926
- Haritz Sardon ET AL: "Organic Acid-Catalyzed Polyurethane Formation via a Dual-Activated Mechanism: Unexpected Preference of N-Activation over O-Activation of Isocyanates", Journal of the Americam Society, vol. 135, no. 43, 30 October 2013 (2013-10-30), pages 16235-16241, XP055722063, US ISSN: 0002-7863, DOI: 10.1021/ja408641g

## Description

### CROSS-REFERENCE TO RELATED APPLICATIONS

This application claims the benefit of U.S. Provisional Patent Application Ser. No. 62/455,778, filed on February 7, 2017.

### FIELD OF THE INVENTION

The present invention relates to coating compositions, methods for making such coating compositions, methods of coating substrates, coatings and coated substrates.

### BACKGROUND INFORMATION

Blocked polyisocyanate curing agents are utilized in a wide variety of coating systems. Upon the application of external energy, such as heating, the blocking agent used to "block" the isocyanato groups is removed allowing the isocyanato groups to react with a polymeric binder resin and cure the coating. Heating is often employed to remove blocking agents from a blocked polyisocyanate curing agent. Heating requires significant energy costs. Previous blocked polyisocyanates that unblock at relatively low temperatures have been difficult to make, are toxic, or are crystalline and difficult to handle. Additionally, while catalyst may be used to reduce the curing temperature of the coating composition, tin and lead catalysts have been subjected to a number of regulatory restrictions by various countries due to environmental concerns. Therefore, coating compositions that cure at low temperatures utilizing a non-tin and non-lead catalyst with a blocked polyisocyanate curing agent is desired.
EP 0 118 743 A1 relates to certain urethanes and curable compositions containing the same. The curable compositions typically contain a cure catalyst, which is a metal salt or complex of lead, zinc, iron, tin or manganese.
WO 2014/004273 A1 discloses stable aqueous resinous dispersions and methods for forming dispersions that include a zinc (II) amidine complex.

### SUMMARY OF THE INVENTION

The present invention is as defined in the appended independent claims. Specific variants are further set forth in the appended dependent claims. Disclosed herein is accordingly a coating composition comprising a film-forming polymer comprising active hydrogen-containing functional groups; a blocked polyisocyanate curing agent comprising a blocking group derived from a blocking agent comprising an alpha-hydroxy amide, ester or thioester; and a curing catalyst that does not contain tin, lead, iron, zinc or manganese, wherein the curing catalyst comprises a guanidine or a bismuth-containing curing catalyst and wherein the film-forming polymer comprises an active hydrogen-containing cationic salt group-containing film-forming polymer.

Also disclosed herein is a method of coating a substrate comprising applying such a coating composition comprising a film-forming polymer comprising active hydrogen-containing functional groups; a blocked polyisocyanate curing agent comprising a blocking group derived from a blocking agent comprising an alpha-hydroxy amide, ester or thioester; and a curing catalyst that does not contain tin, lead, iron, zinc or manganese to at least a portion of the substrate.

Further disclosed herein is a coating formed by at least partially curing such a coating composition comprising a film-forming polymer comprising active hydrogen-containing functional groups; a blocked polyisocyanate curing agent comprising a blocking group derived from a blocking agent comprising an alpha-hydroxy amide, ester or thioester; and a curing catalyst that does not contain tin, lead, iron, zinc or manganese.

Still further disclosed herein is a substrate coated with such a coating composition comprising a film-forming polymer comprising active hydrogen-containing functional groups; a blocked polyisocyanate curing agent comprising a blocking group derived from a blocking agent comprising an alpha-hydroxy amide, ester or thioester; and a curing catalyst that does not contain tin, lead, iron, zinc or manganese, in an at least partially cured state.

Also disclosed herein is a package coated at least in part with such a coating composition comprising a film-forming polymer comprising active hydrogen-containing functional groups; a blocked polyisocyanate curing agent comprising a blocking group derived from a blocking agent comprising an alpha-hydroxy amide, ester or thioester; and a curing catalyst that does not contain tin, lead, iron, zinc or manganese.

### DETAILED DESCRIPTION OF THE INVENTION

As stated above, the present invention is directed to a coating composition comprising a film-forming polymer comprising active hydrogen-containing functional groups; a blocked polyisocyanate curing agent comprising a blocking group derived from a blocking agent comprising an alpha-hydroxy amide, ester or thioester; and a curing catalyst that does not contain tin, lead, iron, zinc or manganese, wherein the curing catalyst comprises a guanidine or a bismuth-containing curing catalyst and wherein the film-forming polymer comprises an active hydrogen-containing cationic salt group-containing film-forming polymer.

According to the present invention, the coating composition comprises a blocked polyisocyanate curing agent comprising a blocking group derived from a blocking agent comprising an alpha-hydroxy amide, ester or thioester. As used herein, a "blocked polyisocyanate" means a polyisocyanate wherein at least a portion of the isocyanato groups are blocked by a blocking group introduced by the reaction of a free isocyanato group with a blocking agent. Therefore, a blocked polyisocyanate may comprise a polyisocyanate reacted with one or more blocking agent(s). As used herein, a "blocking agent" refers to a compound comprising a functional group reactive with an isocyanato group present on the polyisocyanate resulting in binding a residual moiety of the blocking agent to the isocyanato group so that it is stable to active hydrogen functional groups at room temperature (i.e., 23°C). The bound residual moiety of a blocking agent, which provides stability to active hydrogen functional groups at room temperature is referred to as a "blocking group" herein. Blocking groups may be identified by reference to the blocking agent from which they are derived by reaction with an isocyanato group. Blocking groups may be removed under suitable conditions, such as at elevated temperatures such that the free isocyanato groups may be generated from the blocked isocyanato groups. Thus, the reaction with the blocking agent may be reversed at elevated temperature such that the previously blocked isocyanato group is free to react with active hydrogen functional groups. As used herein, the term "derived from" with respect to the blocking group of the blocked polyisocyanate is intended to refer to the presence of the residue of a blocking agent in the blocking group and is not intended to be limited to a blocking group produced by reaction of an isocyanato group of the polyisocyanate with the blocking agent. Accordingly, a blocking group of the present invention resulting from synthetic pathways that do not include direct reaction of the isocyanato group and blocking agent, as explained in more detail below, will still be considered to be "derived from" the blocking agent. As used herein, the term "blocked" polyisocyanate collectively refers to a fully blocked polyisocyanate and an at least partially blocked polyisocyanate. As used herein, a "fully blocked polyisocyanate" refers to a polyisocyanate wherein each of the isocyanato groups has been blocked with a blocking group. As used herein, an "at least partially blocked polyisocyanate" refers to a polyisocyanate wherein at least a portion of the isocyanato groups have been blocked with a blocking group while the remaining isocyanato groups have been reacted with a portion of the polymer backbone.

The polyisocyanates that may be used in preparing the blocked polyisocyanate of the present invention include any suitable polyisocyanate known in the art. A polyisocyanate is an organic compound comprising at least two, at least three, at least four, or more isocyanato functional groups. For example, the polyisocyanate may comprise aliphatic and/or aromatic polyisocyanates. As will be understood, an aromatic polyisocyanate will have a nitrogen atom of an isocyanate group covalently bound to a carbon present in an aromatic group, and an aliphatic polyiscoayante may contain an aromatic group that is indirectly bound to the isocyanato group through a non-aromatic hydrocarbon group. Aliphatic polyisocyanates may include, for example, (i) alkylene isocyanates, such as trimethylene diisocyanate, tetramethylene diisocyanate, pentamethylene diisocyanate, hexamethylene diisocyanate ("HDI"), 1,2-propylene diisocyanate, 1,2-butylene diisocyanate, 2,3-butylene diisocyanate, 1,3-butylene diisocyanate, ethylidene diisocyanate, and butylidene diisocyanate, and (ii) cycloalkylene isocyanates, such as 1,3-cyclopentane diisocyanate, 1,4-cyclohexane diisocyanate, 1,2-cyclohexane diisocyanate, isophorone diisocyanate, methylene bis(4-cyclohexylisocyanate) ("HMDI"), the cyclo-trimer of 1,6-hexmethylene diisocyanate (also known as the isocyanurate trimer of HDI, commercially available as Desmodur N3300 from Convestro AG), and meta-tetramethylxylylene diisocyanate (commercially available as TMXDI^{®} from Allnex SA). Aromatic polyisocyanates may include, for example, (i) arylene isocyanates, such as m-phenylene diisocyanate, p-phenylene diisocyanate, 1,5-naphthalene diisocyanate and 1,4-naphthalene diisocyanate, and (ii) alkarylene isocyanates, such as 4,4'-diphenylene methane diisocyanate ("MDI"), 2,4-tolylene or 2,6-tolylene diisocyanate ("TDI"), or mixtures thereof, 4,4-toluidine diisocyanate and xylylene diisocyanate. Triisocyanates, such as triphenyl methane-4,4',4"-triisocyanate, 1,3,5-triisocyanato benzene and 2,4,6-triisocyanato toluene, tetraisocyanates, such as 4,4'-diphenyldimethyl methane-2,2',5,5'-tetraisocyanate, and polymerized polyisocyanates, such as tolylene diisocyanate dimers and trimers, may also be used. Combinations of polyisocyanates may be used.

According to the present invention, the blocked polyisocyanate curing agent comprises a blocking group derived from a blocking agent comprising an alpha-hydroxy amide, ester or thioester. As used herein, the term "alpha-hydroxy amide" refers to an organic compound having at least one alpha-hydroxy amide moiety that includes a hydroxyl functional group covalently bonded to an alpha-carbon of an amide group. As used herein, the term "alpha-hydroxy ester" refers to an organic compound having at least one alpha-hydroxy ester moiety that includes a hydroxyl functional group covalently bonded to an alpha-carbon of an ester group. As used herein, the term "alpha-hydroxy thioester" refers to an organic compound having at least one alpha-hydroxy thioester moiety that includes a hydroxyl functional group covalently bonded to an alpha-carbon of a thioester group. The blocking agent comprising an alpha-hydroxy amide, ester or thioester may comprise a compound of structure (I): 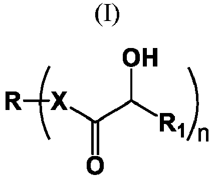 wherein X is N(R₂), O, S; n is 1 to 4; when n = 1 and X = N(R₂), R is hydrogen, a C₁ to C₁₀ alkyl group, an aryl group, a polyether, a polyester, a polyurethane, a hydroxy-alkyl group, or a thio-alkyl group; when n = 1 and X = O or S, R is a C₁ to C₁₀ alkyl group, an aryl group, a polyether, a polyester, a polyurethane, a hydroxy-alkyl group, or a thio-alkyl group; when n = 2 to 4, R is a multi-valent C₁ to C₁₀ alkyl group, a multi-valent aryl group, a multi-valent polyether, a multi-valent polyester, a multi-valent polyurethane; each R₁ is independently hydrogen, a C₁ to C₁₀ alkyl group, an aryl group, or a cycloaliphatic group; each R₂ is independently hydrogen, a C₁ to C₁₀ alkyl group, an aryl group, a cycloaliphatic group, a hydroxy-alkyl group, or a thio-alkyl group; and R and R₂ together can form a cycloaliphatic, heterocyclic structure. The cycloaliphatic, heterocyclic structure may comprise, for example, morpholine, piperidine, or pyrrolidine. It should be noted that R can only be hydrogen if X is N(R₂).

As used herein, "alkyl" refers to a hydrocarbon chain that may be linear or branched and may comprise one or more hydrocarbon rings that are not aromatic. As used herein, "aryl" refers to a hydrocarbon having a delocalized conjugated π-system with alternating double and single bonds between carbon atoms forming one or more coplanar hydrocarbon rings. As used herein, "cycloaliphatic" refers to a hydrocarbon that comprises one or more hydrocarbon rings that are not aromatic. As used herein, the term "polyether" refers to hydrocarbons having more than one ether group, and may optionally comprise other functional groups such as hydroxyl or amino groups. As used herein, the term "polyester" refers to hydrocarbon compounds having more than one ester group, and may optionally comprise other functional groups such as hydroxyl or amino groups. As used herein, the term "polyurethane" refers to hydrocarbon compounds having more than one urethane group, and may optionally comprise other functional groups such as hydroxyl or amino groups. As used herein, the term "hydroxy-alkyl group" refers to an alkyl group having a hydroxyl functional group. As used herein, the term "thio-alkyl group" refers to an alkyl group having a thiol functional group.

The alpha-hydroxy amide blocking agent may comprise a substituted glycolamide. As used herein, the term "substituted glycolamide" refers to a glycolamide compound having at least one of the hydrogen atoms bonded to the nitrogen atom substituted for a substituent such as a monovalent organic group. A substituted glycolamide, with reference to Structure (I), comprises a compound wherein X is N(R₂); R₁ is hydrogen; each R₂ is independently hydrogen, a C₁ to C₁₀ alkyl group, an aryl group, a cycloaliphatic group, a hydroxy-alkyl group, or a thio-alkyl group; and R is a C₁ to C₁₀ alkyl group, an aryl group, a cycloaliphatic group, a polyether, a polyester, a polyurethane, a hydroxy-alkyl group, or a thio-alkyl group. Accordingly, the substituted glycolamide may comprise an alkyl glycolamide, an aryl glycolamide, a polyether glycolamide, a polyester glycolamide, a polyurethane glycolamide, a hydroxy-alkyl glycolamide, or a thio-alkyl glycolamide. Each of these compounds may be mono- or di-substituted, such as, for example, with reference to the alkyl glycolamide, a mono-alkyl glycolamide or di-alkyl glycolamide. Specific non-limiting examples of the mono-alkyl glycolamide include, for example, methyl glycolamide, ethyl glycolamide, propyl glycolamide, isopropyl glycolamide, butyl glycolamide, pentyl glycolamide, hexyl glycolamide, heptyl glycolamide, octyl glycolamide, ethyl-hexyl glycolamide, nonyl glycolamide, decyl glycolamide, , and specific examples of the di-alkyl glycolamide comprise any of the mon-alkyl glycolamide with an additional alkyl substituent, such as dimethyl glycolamide, di-ethyl glycolamide, dibutyl glycolamide, and dipentyl glycolamide.

Additionally, the substituted glycolamide blocking agent may comprise more than one glycolamide groups, such as, with reference to Structure (I), when n is greater than 1. It should be understood that when n is 1 the R group is univalent and when n is greater than 1 the R group is multi-valent, such as a multi-valent C₁ to C₁₀ alkyl group, aryl group, cycloaliphatic group, polyether, polyester, or polyurethane polymer.

The alpha-hydroxy amide blocking agent may comprise a substituted lactamide. As used herein, the term "substituted lactamide" refers to a lactamide compound having at least one of the hydrogen atoms bonded to the nitrogen atom substituted for a substituent such as a monovalent organic group. A substituted lactamide, with reference to Structure (I), comprises a compound wherein X is N(R₂); R₁ is methyl; each R₂ is independently hydrogen, a C₁ to C₁₀ alkyl group, an aryl group, a cycloaliphatic group, a hydroxy-alkyl group, or a thio-alkyl group; and R is a C₁ to C₁₀ alkyl group, an aryl group, a cycloaliphatic group, a polyether, a polyester, a polyurethane, a hydroxy-alkyl group, or a thio-alkyl group. Accordingly, the substituted lactamide may comprise an alkyl lactamide, an aryl lactamide, a polyether lactamide, a polyester lactamide, a polyurethane lactamide, a hydroxy-alkyl lactamide, or a thio-alkyl lactamide. Each of these compounds may be mono- or di-substituted, such as, for example, with reference to the alkyl lactamide, a mono-alkyl lactamide or di-alkyl lactamide. Non-limiting specific examples of the mono-alkyl lactamide include methyl lactamide, ethyl lactamide, propyl lactamide, isopropyl lactamide, butyl lactamide, pentyl lactamide, hexyl lactamide, heptyl lactamide, octyl lactamide, ethyl-hexyl lactamide, nonyl lactamide, and decyl lactamide, and specific examples of the di-alkyl lactamide include di-methyl lactamide, di-ethyl lactamide, di-propyl lactamide, dibutyl lactamide, di-pentyl lactamide, and di-hexyl lactamide.

Additionally, the substituted lactamide blocking agent may comprise more than one lactamide groups, such as, with reference to Structure (I), when n is greater than 1. It should be understood that when n is 1 the R group is univalent and when n is greater than 1 the R group is multi-valent, such as a multi-valent C₁ to C₁₀ alkyl group, aryl group, cycloaliphatic group, polyether, polyester, or polyurethane polymer.

The alkyl glycolamide or the alkyl lactamide blocking group of the present invention may comprise, for example, a compound of the structure: 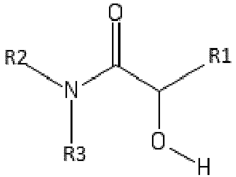 wherein R1 is hydrogen or a methyl group; R2 is a C₁ to C₁₀ alkyl group; and R3 is hydrogen, a C₁ to C₁₀ alkyl group. It will be understood that R1 is a methyl group in the alkyl lactamide.

According to the present invention, a blocking agent that may be used to prepare the blocked polyisocyanate may be a racemic lactamide blocking agent. As used herein, the term "racemic lactamide" or "racemic lactamide blocking agent" refers to a mixture of lactamide stereoisomers that may comprise 20% to 80% by weight, such as 30% to 70% by weight, such as 40% to 60% by weight, such as about 50% by weight of a lactamide having an R stereocenter, and 20% to 80% by weight, such as 30% to 70% by weight, such as 40% to 60% by weight, such as about 50% by weight of a lactamide having an S stereocenter, based on the total weight of the mixture of lactamide stereoisomers. Accordingly, the blocked polyisocyanate may comprise a blocking group derived from a racemic lactamide blocking agent, i.e., blocking groups derived from lactamide(s) of the mixture of lactamide stereoisomers. For simplicity, a blocking group derived from a racemic lactamide blocking agent may be referred to as a "racemic lactamide blocking group."

The racemic lactamide may be produced by reacting a meso-lactide with an alkyl amine. A lactide has the general formula 3,6-dimethyl-1,4-dioxane-2,5-dione and includes two stereocenters at the methyl substituents. As will be appreciated by those skilled in the art, a meso-lactide is not chiral and, therefore, not optically active because it includes one R stereocenter and one S stereocenter. In contrast, D-lactide and L-lactide isomers will include either two R or two S stereocenters and may exclusively form lactamides having either the R or S stereocenter, respectively. The alkyl amine compound is not limited and may comprise any suitable compound comprising a primary or secondary amino group. For example, the alkyl amine may comprise a monoalkyl or dialkyl amine having the general formula R₁N(H)R₂ wherein R₁ is hydrogen or an aliphatic, cycloaliphatic or aromatic group and R₂ is an aliphatic, cycloaliphatic or aromatic group. The alkyl group may comprise, for example, methyl, ethyl, propyl, isopropyl, butyl, sec-butyl, pentyl, and hexyl groups, and the alkyl group may be substituted with other functional groups such as thiol or hydroxyl functional groups, a sulfur linkage, ether linkage or ester linkage. For example, the substituted monoalkyl amine may comprise a polyetheramine such as monoamines available under the trade name JEFFAMINE^{®} from Huntsman Corporation. The dialkyl amine comprises two alkyl groups and may comprise combinations of two different alkyl groups such as, e.g., methylethyl amine. The racemic lactamide produced by reacting the meso-lactide and alkyl amine may result in two lactamide compounds with one having an R stereocenter and one having an S stereocenter and each compound including the residue of the alkyl amine. For example, the reaction of meso-lactide and butyl amine illustrated below in Scheme 1 results in a butyl lactamide having an R stereocenter and a butyl lactamide having an S stereocenter, and the two molecules may together be referred to as racemic butyl lactamide. Likewise, the selection of a different alkyl amine will result in a racemic lactamide having the alkyl group of the selected amine. As such, the racemic lactamide may comprise racemic alkyl lactamide or racemic dialkyl lactamide. Non-limiting examples of racemic alkyl and dialkyl lactamides may include racemic methyl lactamide, racemic ethyl lactamide, racemic propyl lactamide, racemic butyl lactamide, racemic propyl lactamide, racemic hexyl lactamide, racemic dimethyl lactamide, racemic diethyl lactamide, racemic dipropyl lactamide, racemic dibutyl lactamide, racemic dipropyl lactamide, racemic dihexyl lactamide, racemic methylethyl lactamide, racemic ethyl propyl lactamide, racemic propyl butyl lactamide, racemic butylpropyl lactamide, racemic propyl hexyl lactamide, and racemic cyclohexyl lactamide.

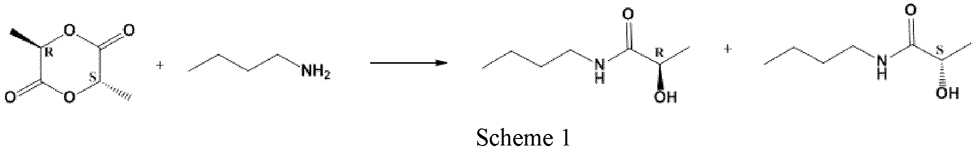

The racemic lactamide may also be produced by reacting a racemic mixture of alkyl lactate with an alkyl amine. An alkyl lactate has the general formula X-2-hydroxypropanoate wherein the X represents an alkyl group such as methyl, ethyl, propyl, butyl, pentyl, hexyl. Each individual alkyl lactate molecule will have either an R or an S stereocenter, and the racemic mixture will collectively have an approximately equal proportion of R and S isomers such that the racemic mixture is not optically active. The use of a racemic mixture of alkyl lactate allows for the production of a "racemic lactamide" as defined herein upon reaction with the alkyl amine. For example, the reaction of a racemic mixture of ethyl lactate and methyl amine illustrated below in Scheme 2 results in a racemic mixture of methyl lactamide, which may be referred to herein as racemic methyl lactamide, and ethanol byproduct. Any of the alkyl amines listed above may be reacted with the alkyl lactate to form a racemic lactamide.

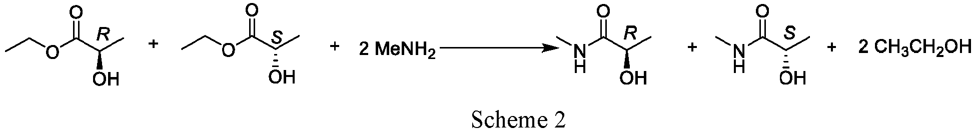

It has been surprisingly discovered that the use of a racemic lactamide blocking group results in a blocked polyisocyanate that is non-crystalline. As used herein, a "non-crystalline" blocked polyisocyanate refers to a blocked polyisocyanate that, when in a static state, is in a liquid state at room temperature (e.g., 25°C) and remains in a liquid state at room temperature for a period of at least 30 days. In contrast, a "crystalline" blocked polyisocyanate refers to a blocked polyisocyanate in the form of solid crystals at room temperature, or if in a liquid state at room temperature, will form solid crystals at room temperature over a period of less than 30 days, such as, e.g., less than 7 days.

It will be understood by those skilled in the art that an at least partially blocked polyisocyanate by virtue of its incorporation into the polymeric backbone will also be non-crystalline. Therefore, a lactamide produced from a chiral lactide or lactate and used as a blocking agent for blocking isocyanato groups of an at least partially blocked polyisocyanate may form a non-crystalline at least partially blocked polyisocyanate.

The blocked polyisocyanate curing agent comprising a blocking group derived from a blocking agent comprising an alpha-hydroxy amide, ester or thioester may also be produced by synthetic methods that do not involve direct reaction of an isocyanato group with the blocking agent. For example, a blocked polyisocyanate curing agent comprising a blocking group derived from a blocking agent comprising an alpha-hydroxy amide may be produced by a two-step synthetic process wherein in a first step a polyisocyanate is reacted with an alpha-hydroxy ester, and a second step wherein the resulting product is further reacted with an alkyl amine. An exemplary reaction pathway identified as Scheme 3 is produced below, wherein a polyisocyanate identified as R-NCO (wherein R is a multi-valent organic moiety including at least one other isocyanato group (not shown)) reacts with an alpha-hydroxy ester (wherein R is a mono-valent organic group) in a first step, and the reaction product is further reacted with a primary or secondary amine (RN(H)R, wherein each R individually corresponds to either R or R₂ as defined above) to produce a blocked polyisocyanate curing agent according to the present invention.

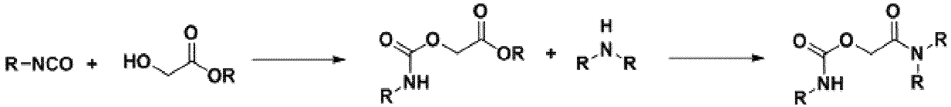

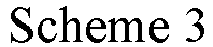

Another exemplary alternative synthetic pathway for producing blocked polyisocyanate curing agent comprising a blocking group derived from a blocking agent comprising an alpha-hydroxy amide includes a two-step synthetic process wherein in a first step a dialkyl carbonate is reacted with an alpha-hydroxy amide, and a second step wherein the resulting product is further reacted with an alkyl amine. An exemplary reaction pathway identified as Scheme 4 is produced below, wherein a carbonate (wherein each R is individually a mono-valent organic group) is reacted with an alpha-hydroxy amide (wherein each R individually corresponds to either R or R₂ as defined above) in a first step, and the reaction product is further reacted with a primary or secondary amine (wherein one R corresponds to a multi-valent organic moiety and one R corresponds to hydrogen) to produce a blocked polyisocyanate curing agent according to the present invention.

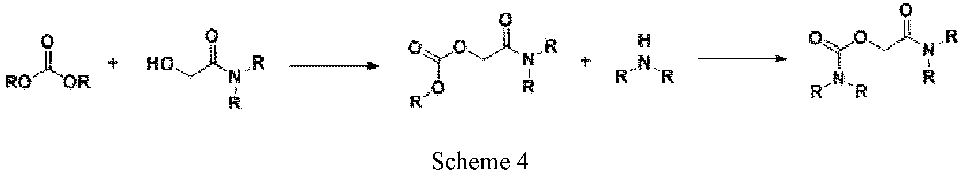

The blocking agent comprising an alpha-hydroxy amide, ester or thioester may block at least 10% of the total blocked isocyanato groups of the blocked polyisocyanate, such as at least 50% of the total blocked isocyanato groups, such as at least 65% of the total blocked isocyanato groups, such as at least 80% of the total blocked isocyanato groups, such as at least 95% of the total blocked isocyanato groups, such as 100% of the total blocked isocyanato groups. The blocking agent comprising an alpha-hydroxy amide, ester or thioester may block 10% to 100% of the total blocked isocyanato groups of the blocked polyisocyanate, such as 50% to 100% of the total blocked isocyanato groups, such as 65% to 100% of the total blocked isocyanato groups, such as 80% to 100% of the total blocked isocyanato groups, such as 95% to 100% of the total blocked isocyanato groups. As used herein, "total blocked isocyanato groups" refers to isocyanato groups of the polyisocyanate that are blocked by a blocking group and would otherwise be unblocked or free to react.

The blocking agent may comprise a bio-based blocking agent. As used herein, the term "bio-based blocking agent" refers to blocking agents that are derived from a naturally occurring raw material source.

According to the present invention, the blocked polyisocyanate may optionally comprise a second blocking group in addition to and different from the blocking group derived from the blocking agent comprising an alpha-hydroxy amide, ester or thioester. As used herein, the term "second blocking group" refers to one or more further blocking groups in addition the blocking groups blocked by the alpha-hydroxy amide, ester or thioester blocking agent, and is not intended to limit the number of different blocking groups present in the blocked polyisocyanate. The second blocking group may comprise any suitable blocking group known in the art. For example, the second blocking group may be derived from an alcohol or a phenolic compound as a blocking agent. Alcohols that may be used as a blocking agent for the second blocking group comprise aliphatic, cycloaliphatic and aromatic alkyl monoalcohols and phenolic compounds such as, for example, lower aliphatic alcohols, such as methyl, ethyl, chloroethyl, propyl, butyl, amyl, hexyl, heptyl, octyl, or nonyl alcohol, 3,3,5-trimethylhexanol, decyl and lauryl alcohols; aromatic alkyl alcohols, such as phenylcarbinol, and methylphenylcarbinol; glycol compounds, such as ethyl glycol monoethyl ether, and ethyl glycol monobutyl ether; and hydroxyketone compounds, such as hydroxyacetone. Phenolic compounds that may be used as blocking agent for the second blocking group may comprise phenol, cresol, xylenol, nitrophenol, chlorophenol, ethyl phenol, t-butyl phenol and 2,5-di-t-butyl-4-hydroxy toluene. Minor amounts of even higher molecular weight, relatively nonvolatile monoalcohols may be used, if desired, to serve as plasticizers in the coatings provided by the present invention. The second blocking group may also be derived from other blocking agents comprising tertiary hydroxyl amines such as diethylethanolamine, oximes such as methylethyl ketone oxime, acetone oxime and cyclohexanone oxime, and amines such as diisopropylamine, diethyl malonate ("DEM") and dimethylpyrazole ("DMP"). The second blocking group may also be derived from a combination of two or more of any of the above described blocking agents.

The second blocking group, if present at all, may block at least 0.1% of the total blocked isocyanato groups of the blocked polyisocyanate, and may block no more than 90% of the total blocked isocyanato groups, such as no more than 50% of the total blocked isocyanato groups, such as no more than 35% of the total blocked isocyanato groups, such as no more than 20% of the total blocked isocyanato groups, such as no more than 5% of the total blocked isocyanato groups. The second blocking group, when present, may block 0.1% to 90% of the total blocked isocyanato groups of the blocked polyisocyanate, such as 0.1% to 50% of the total blocked isocyanato groups, such as 0.1% to 35% of the total blocked isocyanato groups, such as 0.1% to 20% of the total blocked isocyanato groups, such as 0.1% to 5% of the total blocked isocyanato groups.

As mentioned above, the blocked polyisocyanate may be a fully blocked polyisocyanate wherein the isocyanato groups of the polyisocyanate are blocked with one or more of the blocking groups discussed above. According to the present invention, a fully blocked polyisocyanate may have a blocking group that blocks each of the isocyanato groups of the polyisocyanate, i.e., 100% of the isocyanato groups are blocked with blocking groups and no isocyanato groups remain unblocked or free to react. However, a blocked polyisocyanate may have fewer than 100% of the isocyanato groups blocked as long as the coating composition remains a stable dispersion, as defined herein.

Additionally, the blocked polyisocyanate may also be an at least partially blocked polyisocyanate as discussed above. The at least partially blocked polyisocyanate may be partially blocked with one or more of the blocking groups discussed above with the remaining isocyanato groups reacted with the polymer backbone, such as described in U.S. Patent No. 3,947,338, at col. 2, line 65 through col. 5, line 33. For the purposes of determining the percentages of blocking groups present in the blocked polyisocyanate only, isocyanato groups that have been reacted with the polymer backbone should not be included as part of the total blocked isocyanato groups of the blocked polyisocyanate. Accordingly, a blocked polyisocyanate comprising, for example, a blocking group derived from a blocking agent comprising an alpha-hydroxy amide, ester or thioester blocking 100% of the total isocyanato groups of the blocked polyisocyanate includes an at least partially blocked polyisocyanate wherein the blocking group derived from a blocking agent comprising an alpha-hydroxy amide, ester or thioester blocks 100% of the isocyanato groups that are not reacted with the polymer backbone. An at least partially blocked polyisocyanate may have a blocking group that blocks each of the isocyanato groups of the polyisocyanate that have not been reacted with the polymer backbone, i.e., 100% of the total isocyanato groups are blocked with blocking groups and no isocyanato groups remain unblocked or free to react. However, an at least partially blocked polyisocyanate also may have fewer than 100% of the total isocyanato groups blocked as long as the coating composition remains a stable dispersion, as defined herein.

The blocked polyisocyanate may be selected so as to provide a coating composition that cures at low temperatures. As will be understood by one skilled in the art, the temperature at which the coating composition will cure is dependent upon a number of factors including, for example, the blocking group(s) used to block the polyisocyanate, the ratio of blocking groups used to block the polyisocyanate, and any curing catalysts present in the dispersion. As will be further discussed below, the combination of the blocked polyisocyanate, discussed above, and a curing catalyst, discussed below, results in a coating composition that cures at low temperatures due to an unexpected and surprising synergistic effect. As used herein, "low temperatures" with respect to the curing of a coating composition refers to temperatures of 130°C or below.

As used herein, the term "cure", "cured" or similar terms, as used in connection with the coating composition described herein, means that at least a portion of the components that form the coating composition are crosslinked to form a coating. Additionally, curing of the coating composition refers to subjecting said composition to curing conditions (e.g., elevated temperature) leading to the reaction of the reactive functional groups of the components of the coating composition, and resulting in the crosslinking of the components of the composition and formation of an at least partially cured coating. As used herein, the term "at least partially cured" with respect to a coating refers to a coating formed by subjecting the coating composition to curing conditions such that a chemical reaction of at least a portion of the reactive groups of the components of the coating composition occurs to form a coating. A coating may be considered to be "at least partially cured" if it passes the 100 Double Acetone Rubs test, as described below in the Examples, with a rating of 6 or higher. The coating composition may also be subjected to curing conditions such that a substantially complete cure is attained and wherein further curing results in no significant further improvement in the coating properties such as, for example, resistance to solvent or hardness.

The blocked polyisocyanate curing agent of the present invention may be according to the structure: 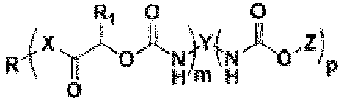 wherein Y represents a multi-valent organic moiety; m ≥ 1; and p ≥ 0; X is N(R₂), O, S; when X = N(R₂), R is hydrogen, a C₁ to C₁₀ alkyl group, an aryl group, a polyether, a polyester, a polyurethane, a hydroxy-alkyl group, or a thio-alkyl group; when X = O or S, R is a C₁ to C₁₀ alkyl group, an aryl group, a polyether, a polyester, a polyurethane, a hydroxy-alkyl group, or a thio-alkyl group; each R₁ is independently hydrogen, a C₁ to C₁₀ alkyl group, an aryl group, or a cycloaliphatic group; when m ≥ 2, R is optionally a multi-valent C₁ to C₁₀ alkyl group, a multi-valent aryl group, a multi-valent polyether, a multi-valent polyester, a multi-valent polyurethane; each R₂ is independently hydrogen, a C₁ to C₁₀ alkyl group, an aryl group, a cycloaliphatic group, a hydroxy-alkyl group, or a thio-alkyl group; R and R₂ together can form a cycloaliphatic, heterocyclic structure; and O-Z represents the residue of a second blocking agent.

As used herein, the term "multi-valent" refers to an organic moiety having two or more bonding sites through which the organic moiety is covalently bonds to other organic moieties. For example, a polyisocyanate is multi-valent because it includes two or more isocyanato groups through which it covalently bonds with other organic moieties. The organic moiety may be, for example, an alkyl group, a cycloaliphatic group, an aryl group, a polyether, a polyester, and a polyurethane.

As used herein, the term "mono-valent" refers to an organic moiety having one bonding site through which the organic moiety is covalently bonded to another organic moiety. Although mono-valent is used to refer to an organic moiety having only one bonding site, that does not preclude the presence of other functional groups through which the organic moiety may bind to additional organic moieties, such as, for example, during cure.

The blocked polyisocyanate may be present in the coating composition of the present invention in an amount of at least 10% by weight, such as at least 25% by weight, such as at least 30% by weight, and may be present in an amount of no more than 60% by weight, such as no more than 55% by weight, such as no more than 50% by weight, based on the total weight of the resin solids of the coating composition. The blocked polyisocyanate may be present in the coating composition in an amount of 10% to 60% by weight, such as 25% to 55% by weight, such as 30% to 50% by weight, based on the total weight of the resin solids of the coating composition. As used herein, the "resin solids" include the film-forming polymer, the blocked polyisocyanate, the curing catalyst, any resin used in preparation of the pigment paste (if present), and any additional water-dispersible non-pigmented component(s).

According to the present invention, the coating composition further comprises a curing catalyst. As used herein, the term "curing catalyst" refers to catalysts that catalyze transurethanation reactions, and specifically catalyze the deblocking of blocked polyisocyanate blocking groups. The curing catalyst does not contain tin, lead, iron, zinc or manganese. Curing catalyst useful according to the present invention includeguanidines, bismuth compounds or complexes, and combinations thereof.

According to the present invention, the curing catalyst may comprise, consist essentially of, or consist of an organic curing catalyst. As used herein, the term "organic curing catalyst" refers to organic compounds that do not contain metal or complexes with metal that function as curing catalysts. The organic curing catalyst may comprise, consist essentially of, or consist of a guanidine. It will be understood that "guanidine," as used herein, refers to guanidine and derivatives thereof. For example, the guanidine may comprise a compound, moiety, and/or residue having the following general structure: 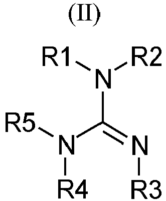 wherein each of R1, R2, R3, R4, and R5 (i.e., substituents of structure (II)) comprise hydrogen, (cyclo)alkyl, aryl, aromatic, organometallic, a polymeric structure, or together can form a cycloalkyl, aryl, or an aromatic structure, and wherein R1, R2, R3, R4, and R5 may be the same or different. As used herein, "(cyclo)alkyl" refers to both alkyl and cycloalkyl. When any of the R groups "together can form a (cyclo)alkyl, aryl, and/or aromatic group" it is meant that any two adjacent R groups are connected to form a cyclic moiety, such as the rings in structures (III) - (VI) below.

It will be appreciated that the double bond between the carbon atom and the nitrogen atom that is depicted in structure (II) may be located between the carbon atom and another nitrogen atom of structure (II). Accordingly, the various substituents of structure (II) may be attached to different nitrogen atoms depending on where the double bond is located within the structure.

The guanidine may comprise a cyclic guanidine such as a guanidine of structure (II) wherein two or more R groups of structure (II) together form one or more rings. In other words, the cyclic guanidine may comprise ≥1 ring(s). For example, the cyclic guanidine may either be a monocyclic guanidine (1 ring) such as depicted in structures (III) and (IV) below, or the cyclic guanidine may be bicyclic or polycyclic guanidine (≥2 rings) such as depicted in structures (V) and (VI) below.

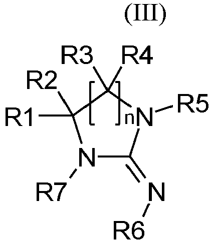

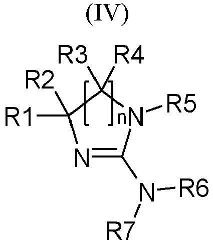

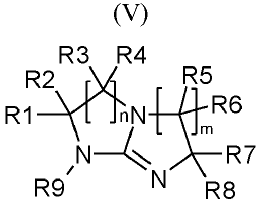

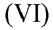

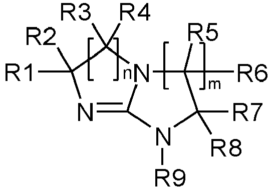

Each substituent of structures (III) and/or (IV), R1-R7, may comprise hydrogen, (cyclo)alkyl, aryl, aromatic, organometallic, a polymeric structure, or together can form a cycloalkyl, aryl, or an aromatic structure, and wherein R1-R7 may be the same or different. Similarly, each substituent of structures (V) and (VI), R1-R9, may be hydrogen, alkyl, aryl, aromatic, organometallic, a polymeric structure, or together can form a cycloalkyl, aryl, or an aromatic structure, and wherein R1-R9 may be the same or different. Moreover, in some examples of structures (III) and/or (IV), certain combinations of R1-R7 may be part of the same ring structure. For example, R1 and R7 of structure (III) may form part of a single ring structure. Moreover, it will be understood that any combination of substituents (R1-R7 of structures (III) and/or (IV) as well as R1-R9 of structures (V) and/or (VI)) may be chosen so long as the substituents do not substantially interfere with the catalytic activity of the cyclic guanidine.

Each ring in the cyclic guanidine may be comprised of ≥5 members. For example, the cyclic guanidine may be comprise a 5-member ring, a 6-member ring, and/or a 7-member ring. As used herein, the term "member" refers to an atom located in a ring structure. Accordingly, a 5-member ring will have 5 atoms in the ring structure ("n" and/or "m"=1 in structures (III)-(VI)), a 6-member ring will have 6 atoms in the ring structure ("n" and/or "m"=2 in structures (III)-(VI)), and a 7-member ring will have 7 atoms in the ring structure ("n" and/or "m"=3 in structures (III)-(VI)). It will be appreciated that if the cyclic guanidine is comprised of ≥2 rings (e.g., structures (V) and (VI)), the number of members in each ring of the cyclic guanidine can either be the same or different. For example, one ring may be a five-member ring while the other ring may be a six-member ring. If the cyclic guanidine is comprised of ≥3 rings, then in addition to the combinations cited in the preceding sentence, the number of members in a first ring of the cyclic guanidine may be different from the number of members in any other ring of the cyclic guanidine.

It will also be understood that the nitrogen atoms of structures (III)-(VI) may further have additional atoms attached thereto. Moreover, the cyclic guanidine may either be substituted or unsubstituted. For example, as used herein in conjunction with the cyclic guanidine, the term "substituted" refers to a cyclic guanidine wherein R5, R6, and/or R7 of structures (III) and/or (IV) and/or R9 of structures (V) and/or (VI) is not hydrogen. As used herein in conjunction with the cyclic guanidine, the term "unsubstituted" refers to a cyclic guanidine wherein R1-R7 of structures (III) and/or (IV) and/or R1-R9 of structures (V) and/or (VI) are hydrogen.

The cyclic guanidine may comprise a bicyclic guanidine, and the bicyclic guanidine may comprise 1,5,7-triazabicyclo[4.4.0]dec-5-ene ("TBD" or "BCG").

According to the present invention, the guanidine may be reacted with an epoxy compound to form a guanidine reaction product for use as curing catalyst according to the present invention for use as the curing catalyst of the present invention. The epoxy compound may be a polyepoxide having at least two 1,2-epoxy groups. The epoxy compound may be saturated or unsaturated, cyclic or acyclic, aliphatic, alicyclic, aromatic or heterocyclic. Moreover, the epoxy compound may contain substituents such as halogen, hydroxyl, and ether groups.

Examples of polyepoxides are those having a 1,2-epoxy equivalency greater than one and/or two; that is, polyepoxides which have on average two or more epoxide groups per molecule. Suitable polyepoxides include polyglycidyl ethers of polyhydric alcohols such as cyclic polyols and polyglycidyl ethers of polyhydric phenols such as Bisphenol A. These polyepoxides may be produced by etherification of polyhydric phenols with an epihalohydrin or dihalohydrin such as epichlorohydrin or dichlorohydrin in the presence of alkali. Besides polyhydric phenols, other cyclic polyols may be used in preparing the polyglycidyl ethers of cyclic polyols. Examples of other cyclic polyols include alicyclic polyols, including cycloaliphatic polyols such as hydrogenated bisphenol A, 1,2-cyclohexane diol and 1,2-bis(hydroxymethyl)cyclohexane.

The polyepoxides may have epoxide equivalent weights of ≥180 g/epoxide group. The polyepoxides may have epoxide equivalent weights of ≤2,000 g/epoxide group. The polyepoxides may have epoxide equivalent weights that range between any combination of values, which were recited in the preceding sentences, inclusive of the recited values. For example, the polyepoxides may have epoxide equivalent weights from 186 to 1,200 g/epoxide group.

The guanidine or guanidine reaction product described above may be at least partially neutralized with an acid (acidified). Suitable acids include organic and inorganic acids. Non-limiting examples of suitable organic acids include formic acid, acetic acid, methanesulfonic acid, and lactic acid. Non-limiting examples of suitable inorganic acids include phosphoric acid and sulfamic acid. Mixtures of the above-mentioned acids also may be used in the present invention.

The extent of neutralization of the guanidine or guanidine reaction product varies with the particular guanidine or guanidine reaction product involved. However, sufficient acid should be used to disperse the guanidine or guanidine reaction product in water. Typically, the amount of acid used provides at least 20% of all of the total neutralization. Excess acid may also be used beyond the amount required for 100% total neutralization. For example, the amount of acid used to neutralize the guanidine or guanidine reaction product may be ≥0.1% based on the total amines in the guanidine or guanidine reaction product. Additionally, the amount of acid used to neutralize the guanidine or guanidine reaction product may be ≤100% based on the total amines in the guanidine or guanidine reaction product. The total amount of acid used to neutralize the guanidine or guanidine reaction product may range between any combination of values, which were recited in the preceding sentences, inclusive of the recited values. For example, the total amount of acid used to neutralize the guanidine or guanidine reaction product may be 20%, 35%, 50%, 60% or 80% based on the total amines in the guanidine or guanidine reaction product.

According to the present invention, the curing catalyst may alternatively or additionally comprise consist essentially of, or consist of a bismuth-containing curing catalyst. The bismuth-containing curing catalyst may comprise a bismuth compound or complex. Suitable bismuth compounds and complexes include bismuth oxides and bismuth salts known in the art. Non-limiting specific examples of bismuth compound or complex curing catalysts include bismuth oxides, bismuth carboxylates, bismuth sulfamate, bismuth lactate, bismuth subnitrate and combinations thereof.

The curing catalyst may be present in the coating composition in an amount of at least 0.01% by weight, based on the total weight of the resin solids of the coating composition, such as at least 0.2% by weight, such as at least 0.6% by weight, and may be present in an amount of no more than 7% by weight, such as no more than 4% by weight, such as no more than 2% by weight. The curing catalyst may be present in the coating composition in an amount of 0.01% to 7% by weight, based on the total weight of the resin solids of the coating composition, such as 0.2% to 4% by weight, such as 0.6% to 2% by weight.

It has been surprisingly discovered that the combination of a blocked polyisocyanate curing agent comprising a blocking group derived from a blocking agent comprising an alpha-hydroxy amide, ester or thioester, and a curing catalyst that does not contain tin, lead, iron, zinc or manganese, as described above, results in coating compositions that cures at low temperatures. The synergistic effect of lower curing temperature produced from the synergistic combination was not expected.

According to the present invention, the coating composition further comprises a film-forming polymer comprising active hydrogen-containing functional groups. As used herein, the term "film-forming polymer" refers to polymers that can form a self-supporting continuous film on at least a horizontal surface of a substrate upon removal of any diluents or carriers present in the composition or upon curing at elevated temperature. As used herein, the term "active hydrogen", "active hydrogen groups" or "active hydrogen functional groups" refers to those groups that are reactive with isocyanates as determined by the Zerewitinoff test as is described in the JOURNAL OF THE AMERICAN CHEMICAL SOCIETY, Vol. 49, page 3181 (1927) and include, for example, hydroxyl groups, primary or secondary amino groups, and thiol groups. As used herein, the term "polymer" encompasses, but is not limited to, oligomers and both homopolymers and copolymers.

The film-forming polymer may comprise any suitable film-forming polymer comprising active hydrogen-containing functional groups known in the art. Film-forming polymers that may be used in the coating compositions of the present invention include, without limitation, those used in automotive OEM coating compositions, automotive refinish coating compositions, industrial coating compositions, architectural coating compositions, coil coating compositions, marine coating compositions, and aerospace coating compositions, among others, so long as the film-forming polymer comprises active hydrogen-containing functional groups.

The film-forming polymer may comprise one or more of acrylic polymers, polyesters, polyurethanes, polyamides, polyethers, polythioethers, polythioesters, polythiols, polyenes, polyols, polyacetoacetate, polysilanes, polysiloxanes, fluoropolymers, polycarbonates, and epoxy resins. Generally, these compounds, may be made by any method known to those skilled in the art. The functional groups on the film-forming polymer comprise active hydrogen-containing functional groups, such as, for example, hydroxyl groups, primary and/or secondary amino groups, thiol groups, or combinations thereof. A portion of these groups may be reacted with an amine, and a portion of the amines reacted with the functional groups may be a ketimine (as described herein) such that the film-forming polymer comprises the residue of a ketimine.

The film-forming polymer comprising active hydrogen-containing functional groups comprises an active hydrogen-containing, cationic salt group-containing polymer. As used herein, the term "active hydrogen-containing, cationic salt group-containing polymer" refers to polymers that include active hydrogen-containing functional groups and at least partially neutralized cationic groups, such as sulfonium groups and ammonium groups, that impart a positive charge. Such polymers are typically dispersed in an aqueous medium, as defined herein, and such compositions may be referred to as an aqueous resinous dispersion.

Examples of polymers that are suitable for use as the active hydrogen-containing, cationic salt group-containing polymer in the present invention include, but are not limited to, alkyd polymers, acrylics, polyepoxides, polyamides, polyurethanes, polyureas, polyethers, and polyesters, among others. Such polymers may comprise amine and/or hydroxyl groups.

More specific examples of suitable active hydrogen-containing, cationic salt group containing polymers include polyepoxide-amine adducts, such as the adduct of a polyglycidyl ethers of a polyphenol, such as Bisphenol A, and primary and/or secondary amines, such as are described in U.S. Pat. No. 4,031,050 at col. 3, line 27 to col. 5, line 50, U.S. Pat. No. 4,452,963 at col. 5, line 58 to col. 6, line 66, and U.S. Pat. No. 6,017,432 at col. 2, line 66 to col. 6, line 26. A portion of the amine that is reacted with the polyepoxide may be a polyamine ketimine derivative (referred to as a "ketimine" herein), such as is described in U.S. Patent No. 4,104,147, column 6, line 23 to column 7, line 23. The ketimine derivative may be a polyamine capable of reacting with an epoxy group and having at least one secondary amino group in addition to containing primary amino groups. The polyamine may comprise alkylene polyamines and substituted alkylene polyamines, including polyamines according to the following formula: H₂NRN(H)RNH₂, wherein R is a divalent alkyl group containing from about 2 to 28 carbon atoms, such as a divalent alkyl group having 2 to 6 carbon atoms. R may represent the same or different radicals in any one polyamine compound. Inert and non-interfering groups may be present on the R group. Non-limiting examples of the polyamine include diethylene triamine, triethylene tetramine, and so forth, and the corresponding propylene, butylene and higher alkylene amines, as well as primary-secondary amines such as N-aminoethyl piperazine. The ketimine may comprise a diketimine, triketimine, tetraketimine. The primary amine groups of the polyamine compounds may be converted to ketimines by reaction with ketones. Such ketones have the following structural formula: R₁C(O)R₂, wherein R₁ and R₂ are organic radicals and are each substantially inert to the ketimine formation reaction, such as, for example, short chain alkyl groups (1 to 4 carbon atoms). Non-limiting examples of ketones include acetone, methyl ethyl ketone, diethyl ketone, methyl propyl ketone, methyl isopropyl ketone, methyl n-butyl ketone, methyl isobutyl ketone, ethyl isopropyl ketone, cyclohexanone, cyclopentanone, and acetophenone.

It has been surprisingly discovered that increasing the amount of ketimine used to prepare the film-forming polymer, such as the active hydrogen-containing, cationic salt group containing polymers, relative to the total amount of amine results in a corresponding reduction in curing temperature. The amount of ketimine used to produce the film-forming polymer may be expressed relative to the total amine used to produce the polymer. For example, a combination of a ketimine and a second amine compound may be used to prepare the polymer. The relative amount of ketimine provided as a percentage used to produce the polymer may be determined by dividing the molar amount of ketimine by the molar amount of total amine (i.e., the sum of the molar amount of the ketimine and other amines used in producing the polymer) and multiplying by 100%. As the relative amount of ketimine increases, the curing temperature may decrease. It should be understood that the ketimine may decompose upon dispersion of the polymer in an aqueous medium resulting in a primary amine present on the polymer. Accordingly, the relative amount of ketimine present in the active hydrogen-containing, cationic salt group-containing film-forming polymer may be expressed as the relative amount of the residue of the ketimine present in the polymer expressed as a percentage of total amine. According to the present invention, the active hydrogen-containing, cationic salt group-containing film-forming polymer may comprise the residue of a ketimine, and the relative molar amount of the residue of the ketimine present in the polymer may be at least 20%, such as at least 25%, such as at least 45%, such as at least 55%, such as at least 65%, such as at least 75%, such as at least 85%, such as at least 95%, such as 100%, relative to the total molar amount of amine present in the polymer, and the relative molar amount of the residue of the ketimine present in the polymer may be no more than 100%, such as no more than 90%, such as no more than 80%, such as no more than 70%, such as no more than 60%, such as no more than 50% relative to the total molar amount of amine present in the polymer. The relative molar amount of the residue of the ketimine present in the polymer may be 20% to 100%, such as 25% to 100%, such as 45% to 100%, such as 55% to 100%, such as 65% to 100%, such as 75% to 100%, such as 85% to 100%, such as 95% to 100% relative to the total molar amount of amine present in the polymer.

Also suitable as active hydrogen-containing, cationic salt group-containing polymers are ungelled polyepoxide-polyoxyalkylenepolyamine resins, such as are described in U.S. Pat. No. 4,432,850 at col. 2, line 60 to col. 5, line 58. In addition, cationic acrylic resins, such as those described in U.S. Pat. No. 3,455,806 at col. 2, line 18 to col. 3, line 61 and 3,928,157 at col. 2, line 29 to col. 3, line 21may be used.

Besides amine salt group-containing resins, quaternary ammonium salt group-containing resins may also be employed as a cationic salt group-containing polymer in the present invention. Examples of these resins are those which are formed from reacting an organic polyepoxide with a tertiary amine acid salt. Such resins are described in U.S. Pat. No. 3,962,165 at col. 2, line 3 to col. 11, line 7; 3,975,346 at col. 1, line 62 to col. 17, line 25 and 4,001,156 at col. 1, line 37 to col. 16, line 7. Examples of other suitable cationic resins include ternary sulfonium salt group-containing resins, such as those described in U.S. Pat. No. 3,793,278 at col. 1, line 32 to col. 5, line 20. Also, cationic resins which cure via a transesterification mechanism, such as described in European Patent Application No. 12463B1 at pg. 2, line 1 to pg. 6, line 25 may also be employed.

Other suitable cationic salt group-containing resins include those that may form photodegradation resistant electrodepositable coating compositions. Such polymers include the polymers comprising cationic amine salt groups which are derived from pendant and/or terminal amino groups that are disclosed in United States Patent Application Publication No. 2003/0054193 A1 at paragraphs [0064] to [0088]. Also suitable are the active hydrogen-containing, cationic salt group-containing resins derived from a polyglycidyl ether of a polyhydric phenol that is essentially free of aliphatic carbon atoms to which are bonded more than one aromatic group, which are described in United States Patent Application Publication No. 2003/0054193 A1 at paragraphs [0096] to [0123].

The active hydrogen-containing, cationic salt group-containing polymer may be made cationic and water dispersible by at least partial neutralization with an acid. Suitable acids include organic and inorganic acids. Non-limiting examples of suitable organic acids include formic acid, acetic acid, methanesulfonic acid, and lactic acid. Non-limiting examples of suitable inorganic acids include phosphoric acid and sulfamic acid. By "sulfamic acid" is meant sulfamic acid itself or derivatives thereof such as those having the structure (VII): 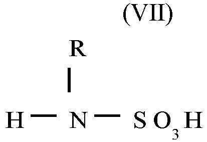 wherein R is hydrogen or an alkyl group having 1 to 4 carbon atoms. Mixtures of the above mentioned acids also may be used in the present invention.

The extent of neutralization of the active hydrogen-containing, cationic salt group-containing polymer may vary with the particular polymer involved. However, sufficient acid should be used to disperse the active hydrogen-containing, cationic salt group-containing polymer in water. For example, the amount of acid used may provide at least 20% of all of the total neutralization. Excess acid may also be used beyond the amount required for 100% total neutralization. For example, the amount of acid used to neutralize the active hydrogen-containing, cationic salt group-containing polymer may be ≧0.1% based on the total amines in the active hydrogen-containing, cationic salt group-containing polymer. Alternatively, the amount of acid used to neutralize the active hydrogen-containing, cationic salt group-containing polymer may be ≦ 100% based on the total amines in the active hydrogen-containing, cationic salt group-containing polymer. The total amount of acid used to neutralize the active hydrogen-containing, cationic salt group-containing polymer may range between any combination of values, which were recited in the preceding sentences, inclusive of the recited values. For example, the total amount of acid used to neutralize the active hydrogen-containing, cationic salt group-containing polymer may be about 20%, 35%, 50%, 60%, or 80% based on the total amines in the active hydrogen-containing, cationic salt group-containing polymer.

The active hydrogen-containing, cationic salt group-containing polymer may be present in the coating composition in an amount of at least 50% by weight, such as at least 70% by weight, and may be present in an amount of no more than 99% by weight, such as no more than 95% by weight, based on the total weight of the resin solids of the coating composition. The active hydrogen-containing, cationic salt group-containing polymer may be present in the coating composition in an amount of 50% to 99% by weight, such as 70% to 95% by weight, based on the total weight of the resin solids of the coating composition.

As discussed above, the coating composition of the present invention may further comprise a liquid medium that serves as a carrier for the components of the coating composition. The liquid medium may comprise an aqueous medium comprising water such that the coating composition is an aqueous dispersion. As used herein, the term aqueous medium refers to a liquid medium comprising at least 50% water by weight, based on the total weight of the liquid medium, such as at least 75% by weight water, such as at least 85% by weight water, such as at least 90% by weight water, such as at least 95% by weight water. As will be appreciated, besides water, the aqueous dispersing medium of the coating composition may include some organic cosolvents. The organic cosolvents are at least partially soluble with water. Examples of such solvents include oxygenated organic solvents, such as monoalkyl ethers of ethylene glycol, diethylene glycol, propylene glycol, and dipropylene glycol which contain from 1 to 10 carbon atoms in the alkyl group, such as the monoethyl and monobutyl ethers of these glycols. Examples of other at least partially water-miscible solvents include alcohols such as ethanol, isopropanol, butanol and diacetone alcohol. If used, the organic cosolvents may be present in amounts less than 50% by weight, such as less than 25% by weight, such as less than 15% by weight, such as less than 10% by weight, such as less than 5% by weight, based on total weight of the aqueous medium.

When the coating composition is dispersed in an aqueous medium, the coating composition comprises an aqueous resinous dispersion. As used herein, the term "aqueous resinous dispersion" refers to a two-phase transparent, translucent or opaque resinous system in which a polymer is in the dispersed phase and the dispersing medium, which includes water, is in the continuous phase. In the present invention, these aqueous resinous dispersions may be electrodepositable aqueous resinous dispersions. As used herein, "electrodepositable aqueous resinous dispersion" refers to an aqueous dispersion that is suitable for use in an electrodepositable coating composition, that is, a coating composition that is capable of being deposited onto a conductive substrate under the influence of an applied electrical potential. In the present invention, the coating compositions described herein may be stable dispersions. As used herein, the term "stable dispersion" refers to a dispersion that does not gel, flocculate or precipitate when maintained at a temperature of 25°C for at least 60 days, or, if some precipitation does occur, the precipitate can be redispersed upon agitation.

The liquid medium may alternatively comprise a non-aqueous medium comprising organic solvent such that the coating composition is a solvent borne coating composition. The organic solvent may comprise any suitable organic solvent known in the art. As used herein, the term "non-aqueous medium" refers to a liquid medium comprising less than 50 weight % water, based on the total weight of the liquid medium. Such non-aqueous liquid mediums may comprise less than 40 weight % water, or less than 30 weight % water, or less than 20 weight % water, or less than 10 weight % water, or less than 5% water, or less than 1% water, based on the total weight of the liquid medium. Non-limiting examples of suitable organic solvents include polar organic solvents e.g. protic organic solvents such as glycols, glycol ether alcohols, alcohols; and volatile ketones, glycol diethers, esters, and diesters. Other non-limiting examples of organic solvents include aromatic and aliphatic hydrocarbons.

Other coating composition components may optionally be present in the coating composition of the present invention, such as, for example, a pigment dispersion that comprises a pigment dispersed in a resinous material, often referred to as a pigment grind vehicle or pigment paste. The pigment content of the coating composition may be expressed as the pigment-to-resin weight ratio. When pigment is included in the coating composition, the pigment-to-resin weight ratio may be within the range of 0.01 to 0.60. Additionally, as will be understood by those skilled in the art, a portion of or all of a component of the coating composition may be incorporated into the pigment dispersion prior to being added to the coating composition. For example, a portion of the film forming-polymer, such as the active hydrogen-containing, cationic salt group-containing polymer, may be included as the resin of the pigment dispersion. Additionally, a portion of or all of the curing catalyst may be included in the pigment dispersion prior to combining the pigment dispersion with the other coating composition components.

According to the present invention, the coating compositions may, if desired, include any of a variety of optional ingredients, such as colorants (e.g., titanium dioxide, carbon black), antioxidants, biocides, defoamers, surfactants, wetting agents, corrosion inhibitors, dispersing aids, clays, hindered amine light stabilizers, UV light absorbers and stabilizers, or combinations thereof.

According to the present invention, the total solids content of the electrodepositable coating composition may be at least 1% by weight, such as at least 5% by weight, and may be no more than 50% by weight, such as no more than 40% by weight, such as no more than 20% by weight, based on the total weight of the coating composition. The total solids content of the electrodepositable coating composition may be from 1% to 50% by weight, such as 5% to 40% by weight, such as 5% to 20% by weight, based on the total weight of the coating composition. As used herein, "total solids" refers to the non-volatile content of the aqueous resinous dispersion, i.e., materials which will not volatilize when heated to 110° C for 15 minutes.

According to the present invention, the coating composition may be substantially free of tin metal catalyst such as, for example, an organotin compound or tin oxides. As used herein, a coating composition is "substantially free" of tin metal catalyst if tin metal catalyst is present in an amount of less than 0.01% by weight of tin metal, based on the total weight of the resin solids of the coating composition. The coating composition may also be essentially free of tin metal catalyst. As used herein, a coating composition is "essentially free" of tin metal catalyst if tin metal catalyst is present in an amount of less than 0.001% by weight of tin metal, based on the total weight of the resin solids of the coating composition. The coating composition may also be completely free of tin metal catalyst. As used herein, a coating composition is "completely free" of tin metal catalyst if tin metal catalyst is not present in the coating composition, i.e., 0.000% by weight of tin metal.

According to the present invention, the coating composition may be substantially free, essentially free, or completely free of lead, iron, zinc or manganese-containing catalysts. As used herein, a coating composition is "substantially free" of lead, iron, zinc or manganese-containing catalysts if each of the catalysts are individually present in an amount of less than 0.05% by weight of metal, based on the total weight of the resin solids of the coating composition. The coating composition may also be essentially free of lead, iron, zinc or manganese-containing catalysts. As used herein, a coating composition is "essentially free" of lead, iron, zinc or manganese-containing catalysts if each of the catalysts are individually present in an amount of less than 0.001% by weight of metal, based on the total weight of the resin solids of the coating composition. The coating composition may also be completely free of lead, iron, zinc or manganese metal catalysts. As used herein, a coating composition is "completely free" of lead, iron, zinc or manganese-containing catalysts if each of the catalysts individually are not present in the coating composition, i.e., 0.000% by weight of metal, based on the total weight of the resin solids of the coating composition.

According to the present invention, the coating composition may be substantially free of metal catalyst. As used herein, a coating composition is "substantially free" of metal catalyst if metal catalyst is present in an amount of less than 0.01% by weight of metal, based on the total weight of the resin solids of the coating composition. The coating composition may also be essentially free of metal catalyst. As used herein, a coating composition is "essentially free" of metal catalyst if metal catalyst is present in an amount of less than 0.001% by weight of metal, based on the total weight of the resin solids of the coating composition. The coating composition may also be completely free of metal catalyst. As used herein, a coating composition is "completely free" of metal catalyst if metal catalyst is not present in the coating composition, i.e., 0.000% by weight of metal.

According to the present invention, the polyisocyanates of the present invention may be free of vinyl groups. As used herein, the term vinyl group refers to the presence of a carbon-carbon double bond having the structure R-C(H)=CH₂.

According to the present invention, the coating composition may be substantially free of isocyanato-terminated oxyethylene-containing prepolymers. As used herein, a coating composition is "substantially free" of isocyanato-terminated oxyethylene-containing prepolymers if isocyanato-terminated oxyethylene-containing prepolymers are present in an amount of 5% by weight or less, based on the total weight of the resin solids of the coating composition. The coating composition may be essentially free of isocyanato-terminated oxyethylene-containing prepolymers. As used herein, a coating composition is "essentially free" of isocyanato-terminated oxyethylene-containing prepolymers if isocyanato-terminated oxyethylene-containing prepolymers are present in an amount of 1% by weight or less, based on the total weight of the resin solids of the coating composition. The coating composition may be completely free of isocyanato-terminated oxyethylene-containing prepolymers. As used herein, a coating composition is "complete free" of isocyanato-terminated oxyethylene-containing prepolymers if isocyanato-terminated oxyethylene-containing prepolymers are not present in an in the coating composition, i.e., 0.0% by weight, based on the total weight of the resin solids of the coating composition.

According to the present invention, the coating composition may be substantially free of non-polyisocyanate-based curing agents, such as, for example, formaldehydes, polymers of formaldehydes, and organic compounds having a plurality of terminal alkoxy groups, such as, for example, a melamine resin. As used herein, a coating composition is "substantially free" of non-polyisocyanate-based curing agents if non-polyisocyanate-based curing agents are present in an amount of 5% by weight or less, based on the total weight of the resin solids of the coating composition. The coating composition may be essentially free of non-polyisocyanate-based curing agents. As used herein, a coating composition is "essentially free" of non-polyisocyanate-based curing agents if non-polyisocyanate-based curing agents are present in an amount of 1% by weight or less, based on the total weight of the resin solids of the coating composition. The coating composition may be completely free of non-polyisocyanate-based curing agents. As used herein, a coating composition is "complete free" of non-polyisocyanate-based curing agents if non-polyisocyanate-based curing agents are not present in an in the coating composition, i.e., 0.0% by weight, based on the total weight of the resin solids of the coating composition.

According to the present invention, the coating composition may be substantially free, essentially free, or completely free bisphenol A (BPA) and derivatives thereof. Derivatives of BPA include, for example, bisphenol A diglycidyl ether (BADGE).

According to the present invention, the coating composition may be substantially free, essentially free, or completely free bisphenol F (BPF) and derivatives thereof. Derivatives of BPF include, for example, bisphenol F diglycidyl ether (BFDGE).

The coating compositions of the present invention can be applied by any means known in the art, such as electrocoating, spraying, electrostatic spraying, dipping, rolling, and brushing.

According to the present invention, the coating composition may be electrophoretically deposited upon an electrically conductive substrate by placing the composition in contact with an electrically conductive anode and an electrically conductive cathode, with the surface to be coated being the cathode. An adherent film of the coating composition is deposited on the cathode when a sufficient voltage is impressed between the electrodes. The conditions under which the electrodeposition is carried out are, in general, similar to those used in electrodeposition of other types of coatings. The applied voltage may be varied and can be, for example, as low as one volt to as high as several thousand volts, such as between 50 and 500 volts. The current density may be between 0.5 ampere and 15 amperes per square foot and tends to decrease during electrodeposition indicating the formation of an insulating resinous film.

Once the coating composition is applied over at least a portion of the substrate, the coated substrate may be heated to a temperature and for a time sufficient to cure the electrodeposited coating composition on the substrate. The temperature at which the coating composition will cure is dependent upon a number of factors including the blocked polyisocyanate selected and the curing catalyst present in the composition. It has been surprisingly discovered that the combination of a blocked polyisocyanate curing agent comprising a blocking group derived from a blocking agent comprising an alpha-hydroxy amide, ester or thioester in combination with a curing catalyst that does not contain tin metal or lead metal results in a coating composition that cures at surprisingly low temperatures. For example, the coating composition may cure at a temperature of 139°C or below, such as 130°C or below, such as 125°C or below, such as 120°C or below, such 110°C or below, such as 100°C or below, such as 95°C or below, such as 95°C to 139°C, such as 95°C to 130°C, such as 95°C to 125°C, such as 95°C to 120°C, such as 95°C to 115°C, such as 95°C to 110°C, such as 95°C to 120°C, as measured by the techniques described in the examples section. The curing time may be dependent upon the curing temperature as well as other variables, for example, film thickness of the coating. For purposes of the present invention, all that is necessary is that the time be sufficient to effect cure of the coating on the substrate. For example, the curing time may range from 10 minutes to 60 minutes, such as 20 to 40 minutes, such as about 30 minutes. The thickness of the resultant cured coating may range from, for example, 15 to 50 microns or more.

As discussed above, the coating composition may be applied to a substrate. Any suitable substrate may be used. For example, the electrodepositable coating compositions may be applied over any electrically conductive substrate. Suitable substrates include metal substrates, metal alloy substrates, and/or substrates that have been metallized, such as nickel plated plastic. Additionally, substrates may comprise non-metal conductive materials including composite materials such as, for example, materials comprising carbon fibers. According to the present invention, the metal or metal alloy may comprise cold rolled steel, hot rolled steel, steel coated with zinc metal, zinc compounds, or zinc alloys, such as electrogalvanized steel, hot-dipped galvanized steel, galvanealed steel, and steel plated with zinc alloy. Aluminum alloys of the 2XXX, 5XXX, 6XXX, or 7XXX series as well as clad aluminum alloys and cast aluminum alloys of the A356 series also may be used as the substrate according to the present invention. Magnesium alloys of the AZ31B, AZ91C, AM60B, or EV31A series also may be used as the substrate. The substrate used in the present invention may also comprise titanium and/or titanium alloys. Other suitable non-ferrous metals include copper and magnesium, as well as alloys of these materials. Suitable metal substrates for use in the present invention include those that are often used in the assembly of vehicular bodies (e.g., without limitation, door, body panel, trunk deck lid, roof panel, hood, roof and/or stringers, rivets, landing gear components, and/or skins used on an aircraft), a vehicular frame, vehicular parts, motorcycles, wheels, industrial structures and components such as appliances, including washers, dryers, refrigerators, stoves, and dishwashers, agricultural equipment, lawn and garden equipment, air conditioning units, heat pump units, lawn furniture, and other articles. As used herein, "vehicle" or variations thereof includes, but is not limited to, civilian, commercial and military aircraft, and/or land vehicles such as cars, motorcycles, and/or trucks. The metal substrate also may be in the form of, for example, a sheet of metal or a fabricated part. It will also be understood that the substrate may be pretreated with a pretreatment solution including a zinc phosphate pretreatment solution such as, for example, those described in U.S. Patent Nos. 4,793,867 and 5,588,989, or a zirconium containing pretreatment solution such as, for example, those described in U.S. Patent Nos. 7,749,368 and 8,673,091.

The coating compositions of the present invention may also be applied to packages of all sorts including those for use on food and beverage containers (e.g., two-piece cans, three-piece cans). A "package" is anything used to contain another item. It can be made of metal or non-metal, for example, plastic or laminate, and be in any form. For example, the package may be a laminate tube, or a metal can. The term "metal can" includes any type of metal can, container or any type of receptacle or portion thereof used to hold something. One example of a metal can is a food can; the term "food can(s)" is used herein to refer to cans, containers or any type of receptacle or portion thereof used to hold any type of food and/or beverage. The term "metal can(s)" specifically includes food cans and also specifically includes "can ends", which are typically stamped from can end stock and used in conjunction with the packaging of beverages. The term "metal cans" also specifically includes metal caps and/or closures such as bottle caps, screw top caps and lids of any size, and lug caps. The metal cans can be used to hold other items as well, including, but not limited to, personal care products, bug spray, spray paint, and any other compound suitable for packaging in an aerosol can. The cans can include "two-piece cans" and "three-piece cans" as well as drawn and ironed one-piece cans; such one-piece cans often find application with aerosol products. Packages coated according to the present invention can also include plastic bottles, plastic tubes, laminates and flexible packaging, such as those made from PE, PP, and PET. Such packaging could hold, for example, food, toothpaste, and personal care products. The compositions may be applied to the food or beverage-contacting surface by any means known in the art such as roll coating, spraying and electrocoating. It will be appreciated that for two-piece food cans, the coating will typically be sprayed after the can is made. For three-piece food cans, a flat metal sheet or a coil metal strip may be roll coated with the coating composition and then the can body and/or can end will be formed. The percent solids of the composition can be adjusted based upon the means of application. The coating may be applied to food and beverage containers at a dry film weight of 24 mgs/25.8 cm² (4 in²) to 12 mgs/25.8 cm² (4 in²), such as 20 mgs/25.8 cm² (4 in²) to 14 mgs/25.8 cm² (4 in²).

Accordingly, the present invention is further directed to a package coated at least in part with any of the coating compositions described above.

The present invention is also directed to methods for coating a substrate. Such methods may comprise (a) electrophoretically depositing on at least a portion of the substrate a coating composition of the present invention and (b) heating the coated substrate to a temperature and for a time sufficient to at least partially cure the electrodeposited coating on the substrate. Alternatively, such methods may comprise (a) electrophoretically depositing on at least a portion of the substrate a coating composition of the present invention to form an electrodeposited coating over at least a portion of the substrate, (b) heating the coated substrate to a temperature, such as 130°C or below, and for a time sufficient to at least partially cure the electrodeposited coating on the substrate, (c) applying to the cured electrodeposited coating one or more pigment-containing coating compositions and/or one or more pigment-free coating compositions to form a top coat over at least a portion of the at least partially cured electrodeposited coating, and (d) heating the coated substrate of step (c) to a temperature and for a time sufficient to cure the top coat.

The coating composition of the present invention may be utilized in an electrocoating layer that is part of a multi-layer coating composite comprising a substrate with various coating layers. The coating layers may include a pretreatment layer, such as a phosphate layer (e.g., zinc phosphate layer) or zirconium layer, an electrocoating layer which results from the coating composition of the present invention, and suitable top coat layer(s) (e.g., base coat, clear coat layer, pigmented monocoat, and color-plus-clear composite compositions). It is understood that suitable topcoat layers include any of those known in the art, and each independently may be waterborne, solventborne, in solid particulate form (*i.e.,* a powder coating composition), or in the form of a powder slurry. The top coat typically includes a film-forming polymer, crosslinking material and, if a colored base coat or monocoat, one or more pigments. According to the present invention, a primer layer may be disposed between the electrocoating layer and the base coat layer. According to the present invention, one or more of the topcoat layers may be applied onto a substantially uncured underlying layer. For example, a clear coat layer may be applied onto at least a portion of a substantially uncured basecoat layer (wet-on-wet), and both layers may be simultaneously cured in a downstream process.

Moreover, the top coat layers may be applied directly onto the electrodepositable coating layer. In other words, the coated substrate may lack a primer layer. For example, a basecoat layer may be applied directly onto at least a portion of the electrodepositable coating layer. This process may be referred to as a compact process.

It will also be understood that the top coat layers may be applied onto an underlying layer despite the fact that the underlying layer has not been fully cured. For example, a clearcoat layer may be applied onto a basecoat layer even though the basecoat layer has not been subjected to a curing step. Both layers may then be cured during a subsequent curing step thereby eliminating the need to cure the basecoat layer and the clearcoat layer separately.

According to the present invention, additional ingredients such as colorants and fillers may be present in the various coating compositions from which the top coat layers result. Any suitable colorants and fillers may be used. For example, the colorant may be added to the coating in any suitable form, such as discrete particles, dispersions, solutions and/or flakes. A single colorant or a mixture of two or more colorants can be used in the coatings of the present invention. It should be noted that, in general, the colorant can be present in a layer of the multi-layer composite in any amount sufficient to impart the desired property, visual and/or color effect.

Example colorants include pigments, dyes and tints, such as those used in the paint industry and/or listed in the Dry Color Manufacturers Association (DCMA), as well as special effect compositions. A colorant may include, for example, a finely divided solid powder that is insoluble but wettable under the conditions of use. A colorant may be organic or inorganic and may be agglomerated or non-agglomerated. Colorants may be incorporated into the coatings by grinding or simple mixing. Colorants may be incorporated by grinding into the coating by use of a grind vehicle, such as an acrylic grind vehicle, the use of which will be familiar to one skilled in the art.

Example pigments and/or pigment compositions include, but are not limited to, carbazole dioxazine crude pigment, azo, monoazo, disazo, naphthol AS, salt type (lakes), benzimidazolone, condensation, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPP red BO"), titanium dioxide, carbon black, zinc oxide, antimony oxide, and organic or inorganic UV opacifying pigments such as iron oxide, transparent red or yellow iron oxide, phthalocyanine blue and mixtures thereof. The terms "pigment" and "colored filler" can be used interchangeably.

Example dyes include, but are not limited to, those that are solvent and/or aqueous based such as acid dyes, azoic dyes, basic dyes, direct dyes, disperse dyes, reactive dyes, solvent dyes, sulfur dyes, mordant dyes, for example, bismuth vanadate, anthraquinone, perylene, aluminum, quinacridone, thiazole, thiazine, azo, indigoid, nitro, nitroso, oxazine, phthalocyanine, quinoline, stilbene, and triphenyl methane.

Example tints include, but are not limited to, pigments dispersed in water-based or water miscible carriers such as AQUA-CHEM 896 commercially available from Degussa, Inc., CHARISMA COLORANTS and MAXITONER INDUSTRIAL COLORANTS commercially available from Accurate Dispersions division of Eastman Chemical, Inc.

As noted above, the colorant may be in the form of a dispersion including, but not limited to, a nanoparticle dispersion. Nanoparticle dispersions can include one or more highly dispersed nanoparticle colorants and/or colorant particles that produce a desired visible color and/or opacity and/or visual effect. Nanoparticle dispersions may include colorants such as pigments or dyes having a particle size of less than 150 nm, such as less than 70 nm, or less than 30 nm. Nanoparticles may be produced by milling stock organic or inorganic pigments with grinding media having a particle size of less than 0.5 mm. Example nanoparticle dispersions and methods for making them are identified in U.S. Patent No. 6,875,800 B2. Nanoparticle dispersions may also be produced by crystallization, precipitation, gas phase condensation, and chemical attrition (i.e., partial dissolution). In order to minimize re-agglomeration of nanoparticles within the coating, a dispersion of resin-coated nanoparticles may be used. As used herein, a "dispersion of resin-coated nanoparticles" refers to a continuous phase in which is dispersed discreet "composite microparticles" that comprise a nanoparticle and a resin coating on the nanoparticle. Example dispersions of resin-coated nanoparticles and methods for making them are identified in U.S. Application No. 10/876,031 filed June 24, 2004 and U.S. Provisional Application No. 60/482,167 filed June 24, 2003.

According to the present invention, special effect compositions that may be used in one or more layers of the multi-layer coating composite include pigments and/or compositions that produce one or more appearance effects such as reflectance, pearlescence, metallic sheen, phosphorescence, fluorescence, photochromism, photosensitivity, thermochromism, goniochromism and/or color-change. Additional special effect compositions may provide other perceptible properties, such as reflectivity, opacity or texture. For example, special effect compositions may produce a color shift, such that the color of the coating changes when the coating is viewed at different angles. Example color effect compositions are identified in U.S. Patent No. 6,894,086. Additional color effect compositions may include transparent coated mica and/or synthetic mica, coated silica, coated alumina, a transparent liquid crystal pigment, a liquid crystal coating, and/or any composition wherein interference results from a refractive index differential within the material and not because of the refractive index differential between the surface of the material and the air.

According to the present invention, a photosensitive composition and/or photochromic composition, which reversibly alters its color when exposed to one or more light sources, can be used in a number of layers in the multi-layer composite. Photochromic and/or photosensitive compositions can be activated by exposure to radiation of a specified wavelength. When the composition becomes excited, the molecular structure is changed and the altered structure exhibits a new color that is different from the original color of the composition. When the exposure to radiation is removed, the photochromic and/or photosensitive composition can return to a state of rest, in which the original color of the composition returns. For example, the photochromic and/or photosensitive composition may be colorless in a non-excited state and exhibit a color in an excited state. Full color-change may appear within milliseconds to several minutes, such as from 20 seconds to 60 seconds. Example photochromic and/or photosensitive compositions include photochromic dyes.

According to the present invention, the photosensitive composition and/or photochromic composition may be associated with and/or at least partially bound to, such as by covalent bonding, a polymer and/or polymeric materials of a polymerizable component. In contrast to some coatings in which the photosensitive composition may migrate out of the coating and crystallize into the substrate, the photosensitive composition and/or photochromic composition associated with and/or at least partially bound to a polymer and/or polymerizable component in accordance with the present invention, have minimal migration out of the coating. Example photosensitive compositions and/or photochromic compositions and methods for making them are identified in U.S. Application Serial No. 10/892,919 filed July 16, 2004.

The present invention is further directed to a coating formed by at least partially curing the coating composition described herein.

The present invention is further directed to a substrate that is coated, at least in part, with the coating composition described herein. The coating composition may be in an at least partially cured state.

As used herein, unless otherwise defined, a coating composition is substantially free of a specific ingredient if the ingredient is present in an amount of 1% by weight or less, based on the total weight of the resin solids.

As used herein, unless otherwise defined, a coating composition is essentially free of a specific ingredient if the ingredient is present in an amount of 0.1% by weight or less, based on the total weight of the resin solids.

As used herein, unless otherwise defined, a coating composition is completely free of a specific ingredient if the ingredient is not present in the coating composition, i.e., 0.00% by weight, based on the total weight of the resin solids.

For purposes of the detailed description, it is to be understood that the invention may assume various alternative variations and step sequences, except where expressly specified to the contrary. Moreover, other than in any operating examples, or where otherwise indicated, all numbers such as those expressing values, amounts, percentages, ranges, subranges and fractions may be read as if prefaced by the word "about," even if the term does not expressly appear. Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques. Where a closed or open-ended numerical range is described herein, all numbers, values, amounts, percentages, subranges and fractions within or encompassed by the numerical range are to be considered as being specifically included in and belonging to the original disclosure of this application as if these numbers, values, amounts, percentages, subranges and fractions had been explicitly written out in their entirety.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

As used herein, unless indicated otherwise, a plural term can encompass its singular counterpart and vice versa, unless indicated otherwise. For example, although reference is made herein to "a" film-forming polymer comprising active hydrogen-containing functional groups, "a" blocked polyisocyanate curing agent comprising a blocking group derived from a blocking agent comprising an alpha-hydroxy amide, ester or thioester, and "a" curing catalyst, a combination (i.e., a plurality) of these components can be used. In addition, in this application, the use of "or" means "and/or" unless specifically stated otherwise, even though "and/or" may be explicitly used in certain instances.

As used herein, "including," "containing" and like terms are understood in the context of this application to be synonymous with "comprising" and are therefore open-ended and do not exclude the presence of additional undescribed or unrecited elements, materials, ingredients or method steps. As used herein, "consisting of" is understood in the context of this application to exclude the presence of any unspecified element, ingredient or method step. As used herein, "consisting essentially of" is understood in the context of this application to include the specified elements, materials, ingredients or method steps "and those that do not materially affect the basic and novel characteristic(s)" of what is being described.

As used herein, the terms "on," "onto," "applied on," "applied onto," "formed on," "deposited on," "deposited onto," mean formed, overlaid, deposited, or provided on but not necessarily in contact with the surface. For example, an electrodepositable coating composition "deposited onto" a substrate does not preclude the presence of one or more other intervening coating layers of the same or different composition located between the electrodepositable coating composition and the substrate.

Illustrating the invention are the following examples, which, however, are not to be considered as limiting the invention to their details. Unless otherwise indicated, all parts and percentages in the following examples, as well as throughout the specification, are by weight.

### EXAMPLES

### EXAMPLE 1

### Preparation of Dibutylglycolamide ("DBGA") Blocked Polyisocyanate Curing Agent (Ratio of isocyanato groups from toluene diisocyanate to blocking groups from trimethylol propane and DBGA: TDI/TMP/DBGA = 10/5/5)

| # | Material | Amount | |
|---|---|---|---|
| | | lbs | Kg |
| 1 | Toluene diisocyanate | 7568.80 | 3433.15 |
| 2 | Methyl isobutyl ketone | 4249.60 | 1927.58 |
| 3 | Dibutyltin dilaurate | 1773.60 gm | 1773.60 gm |
| 4 | Trimethylol propane | 2000.00 | 907.18 |
| 5 | Methyl isobutyl ketone | 1000.00 | 453.59 |
| 6 | Dibutyl glycolamide¹ | 8816.00 | 3998.87 |
| 7 | Methyl isobutyl ketone | 1000.00 | 453.59 |
| 8 | Bisphenol A polyol | 2137.50 | 969.55 |
| 9 | DOWANOL PPH² | 2850.00 | 1292.74 |
| 10 | Methyl isobutyl ketone | 2205.00 | 1000.17 |

| | | | |
|---|---|---|---|
| ¹ Prepared according to Example 1 of U.S. Patent No. 4,452,930 ² Available from DOW Chemicals | | | |

A dibutylglycolamide blocked polyisocyanate curing agent was prepared as follows: Charges 1, 2 and 3 were combined in a flask set up for total reflux with stirring under nitrogen and heated to 35°C. Charge 4 was then added in four equal portions with a 30-minute hold following each addition. Following addition of charge 4, the flask was rinsed with charge 5 and held at 95°C for 1 hour. The mixture was then allowed to cool to 70°C and then charge 6 was added over two hours while keeping the reaction temperature below 100°C. After the addition of charge 6, the reactor was held at 105°C for 1 hour. The hold was continued until no isocyanate peak remained at 2259 cm⁻¹ as measured by a Thermo Scientific Nicolet iS5 FT-IR Spectrometer. Then charges 7, 8, 9 and 10 were added and the reaction was held for 30 minutes.

### EXAMPLE 2

### Preparation of a cationic amine-functionalized resinous dispersion using the DBGA Blocked Polyisocyanate Curing Agent of Example 1

| # | Material | Amount | |
|---|---|---|---|
| | | lbs | Kg |
| 1 | EPON 828¹ | 9660.00 | 4381.70 |
| 2 | Bisphenol A | 4237.00 | 1921.87 |
| 3 | Methyl isobutyl ketone ("MIBK") | 1161.00 | 526.62 |
| 4 | Ethyl triphenyl phosphonium bromide | 9.70 | 4.40 |
| 5 | Dowanol PPh2 | 1435.00 | 650.90 |
| 6 | Methyl isobutyl diketimine of diethylene triamine (72.7% solids in MIBK)³ | 1015.00 | 460.40 |
| 7 | Methyl ethanol amine | 866.00 | 392.81 |
| 8 | DBGA Blocked Crosslinker⁴ | 18060.00 | 8191.87 |
| 9 | 90% Formic acid | 606.00 | 274.88 |
| 10 | DI Water | 13184.00 | 5980.16 |
| 11 | DI Water | 32090.00 | 14555.77 |

| | | | |
|---|---|---|---|
| ¹ Difunctional bisphenol A/epichlorohydrin derived liquid epoxy resin ² Available from DOW chemical company ³ Reaction product of diethylene triamine and methyl isobutyl ketone produced by combining diethylene triamine and excess methyl isobutyl ketone in a reactor equipped with a mechanical stirrer, temperature probe, and a condenser with a Dean Stark trap filled with methyl isobutyl keton attached and heating the mixture to reflux. Water was separated from MIBK in the Dean Stark trap and removed from the reaction. The theoretical solids content of the final product was 72.7% by weight. ⁴ As prepared in the Example 1. | | | |

A procedure for making a cationic amine-functionalized resinous dispersion was performed as follows: Charges 1 through 4 were added to a reactor set up for total reflux with stirring under nitrogen. The mixture was heated to a temperature of 132°C and was allowed to exotherm (180°C maximum). The mixture was held for 2 hours and then allowed to cool to 95°C. Charge 5 was added to aid this cooling. At a temperature of 95°C, charges 6 and 7 were added quickly and the mixture was then held at 110°C for one hour. Charge 8 then was added and the reaction mixture held for 60 minutes. 16,531 kg (36,444 lbs) of the resulting mixture was then poured into a pre-mixed mixture of deionized water (charge 10) and 90% formic acid (charge 9) held at 35°C and the dispersion was stirred for 1 hour. More deionized water (charge 11) then was added to the dispersion. Methyl isobutyl ketone then was removed from the dispersion under vacuum at a temperature of 60-70°C. The resulting cationic amine-functionalized resinous dispersion had a solids content of 35.70% by weight.

### EXAMPLE 3

### Synthesis of N-Butyl Glycolamide Blocking Agent

An N-butyl glycolamide blocking agent was prepared according to the following procedure: 1,000.43 g of glycolide (commercially available from AK Scientific, Inc.) was charged into a 3000-mL, 4-necked round bottom flask equipped with a stirrer, a condenser, a nitrogen inlet, and a thermocouple. Agitation and a nitrogen flow of 5,663 cm³ (0.2 standard cubic feet (scft)) / minute were started. 1,266.59 g of Mono-N-butylamine (commercially available from Eastman Chemical Company) was added to the flask over 4.5 hours at a rate such that the reactor temperature did not exceed 65°C. An ice bath was also placed under the flask during the addition to control the reaction temperature. After completion of the addition, the reaction mixture was heated to 80°C and held for 4 hours until the MEQ amine is less than 0.2 as measured by titration using a Metrohm 751 PGPD Titrino with 0.1 N Perchloric acid in glacial acetic acid as the titration reagent. A slightly yellow liquid compound was obtained with a yield of 98.0%. This product was used for making crosslinker without further purification.

### EXAMPLE 4

### Preparation of N-Butylglycolamide ("BGA") Blocked Polyisocyanate Curing Agent (TDI/TMP/BGA 10/5/5)

| # | Material | Amount (g) |
|---|---|---|
| 1 | Toluene diisocyanate | 316.20 |
| 2 | Methyl isobutyl ketone | 174.46 |
| 3 | Dibutyltin dilaurate | 0.36 |
| 4 | Trimethylol propane | 81.52 |
| 5 | Methyl isobutyl ketone | 21.81 |
| 6 | N-Butylglycolamide¹ | 241.39 |
| 7 | Methyl isobutyl ketone | 20.72 |
| 8 | Bisphenol A polyol | 74.62 |
| 9 | DOWANOL PPH² | 99.51 |
| 10 | Methyl isobutyl ketone | 1.02 |

| | | |
|---|---|---|
| ¹ As prepared in Example 3 ² Available from DOW Chemicals | | |

A N-butylglycolamide blocked polyisocyanate curing agent was prepared as follows: Charges 1, 2 and 3 were combined in a flask with nitrogen and heated to 35°C. Charge 4 was added in four equal portions with a 30 minute hold following each addition. After the addition of charge 4, the flask was rinsed with charge 5 and held at 95°C for 1 hr. The mixture was then allowed to cool to 70°C and then charge 6 was added over two hours while keeping the temperature below 100°C. After the addition of charge 6, the reactor was held at 105°C for 1 hour. The hold was continued until no isocyanate peak remained at 2259 cm⁻¹ as measured by a Thermo Scientific Nicolet iS5 FT-IR Spectrometer. Then charges 7, 8, 9 and 10 were added and the reaction was held for 30 minutes. The composition had a theoretical solids content of 69.2% by weight.

### EXAMPLE 5

### Preparation of a cationic amine-functionalized resinous dispersion using BGA Blocked Polyisocyanate Curing Agent

| # | Material | Amount (g) |
|---|---|---|
| 1 | Epon 828 | 570.3 |
| 2 | Bisphenol A | 249.9 |
| 3 | Methyl isobutyl ketone | 74.8 |
| 4 | Ethyl triphenyl phosphonium bromide | 0.57 |
| 5 | Dowanol PPh¹ | 80.9 |
| 6 | Methyl isobutyl diketimine of diethylene triamine (72.7% solids in MIBK)² | 59.9 |
| 7 | Methyl ethanol amine | 51.1 |
| 8 | Crosslinker³ | 831.5 |
| 9 | 90% Formic acid | 31.6 |
| 10 | DI Water | 922.3 |
| 11 | DI Water | 1140.1 |

| | | |
|---|---|---|
| ¹ Available from DOW chemical company ² Reaction product of diethylene triamine and methyl isobutyl ketone produced according to the procedure in footnote 3 of Example 2 ³ As prepared in the Example 4 | | |

A procedure for making a cationic amine-functionalized resinous dispersion was performed as follows: Charges 1 through 4 were added to a flask set up for total reflux with stirring under nitrogen. The mixture was heated to a temperature of 132°C and was allowed to exotherm (180°C maximum). The mixture was held for 2 hours and then allowed to cool to 95°C. Charge 5 was added to aid this cooling. At a temperature of 95°C, charges 6 and 7 were added quickly and the mixture was then held at 110°C for one hour. Charge 8 then was added and the reaction mixture held for 60 minutes. 1706.1 grams of the resulting mixture was then poured into a pre-mixed mixture of deionized water (charge 10) and 90% formic acid (charge 9) and the dispersion was held at 35°C with stirring for 1 hour. More deionized water (charge 11) then was added to the dispersion. Methyl isobutyl ketone then was removed from the dispersion under vacuum at a temperature of 60-70°C. The resulting cationic amine-functionalized resinous dispersion had a solids content of 40.88% by weight.

### EXAMPLE 6

### Synthesis of Meso n-Butyllactamide Blocking Agent

936.92 g of mono-N-butylamine (commercially available from Eastman Chemical Company) was charged to a 5L, 4-necked round bottom flask equipped with equipped with a stirrer, a condenser, a nitrogen inlet, and a thermocouple. Agitation and a nitrogen flow of 5,663 cm³ (0.2 standard cubic feet (scft)) / minute were started. 932.48 g of meso-lactide (commercially available as Ingeo^{™} lactide M3002 from NatureWorks LLC) was added to the flask over 3.5 hours at a rate such that the reactor temperature did not exceed 40°C. An ice bath was also placed under the reactor during the addition to control the reaction temperature. After completion of addition, the reaction mixture was heated to 70°C and held for 4 hours until MEQ amine is less than 0.2 as measured by titration using a Metrohm 751 PGPD Titrino with 0.1 N Perchloric acid in glacial acetic acid as the titration reagent. A slightly yellow liquid was obtained. This product was used for making crosslinker without further purification.

### EXAMPLE 7

### Preparation of Meso n-Butyllactamide ("BL") Blocked Polyisocyanate Curing Agent (TDI/TMP/BL 10/5/5)

| # | Material | Amount (g) |
|---|---|---|
| 1 | Toluene diisocyanate | 640.00 |
| 2 | Methyl isobutyl ketone | 201.46 |
| 3 | Dibutyltin dilaurate | 0.74 |
| 4 | Trimethylol propane | 164.96 |
| 5 | Methyl isobutyl ketone | 44.14 |
| 6 | Butyl lactamide¹ | 540.80 |
| 7 | Methyl isobutyl ketone | 44.14 |
| 8 | Bisphenol A polyol | 157.06 |
| 9 | Dowanol PPH² | 209.66 |
| 10 | Methyl isobutyl ketone | 2.06 |
| 11 | Butylcarbitol formal | 55.17 |

| | | |
|---|---|---|
| ¹ As prepared in Example 6 ²Available from DOW Chemicals | | |

A meso n-butyllactamide blocked polyisocyanate curing agent was prepared as follows: Charges 1, 2 and 3 were combined in a flask with nitrogen and heated to 35°C. Charge 4 was added in four equal portions with a 30 minute hold following each addition. After the addition of charge 4, the flask was rinsed with charge 5 and held at 95°C for 1 hr. The mixture was then allowed to cool to 70°C and then charge 6 was added over two hours while keeping the temperature below 100°C. After the addition of charge 6, the reactor was held at 105°C for 1 hour. The hold was continued until no isocyanate peak remained at 2259 cm⁻¹ as measured by a Thermo Scientific Nicolet iS5 FT-IR Spectrometer. Then charges 7, 8, 9, 10 and 11 were added and the reaction was held for 30 minutes. The composition had a theoretical solids content of 75.7% by weight.

### EXAMPLE 8

### Preparation of a cationic amine-functionalized resinous dispersion using BL Blocked Polyisocyanate Curing Agent

| # | Material | Amount (g) |
|---|---|---|
| 1 | Epon 828 | 576.1 |
| 2 | Bisphenol A | 252.5 |
| 3 | Methyl isobutyl ketone | 75.5 |
| 4 | Ethyl triphenyl phosphonium bromide | 0.58 |
| 5 | Dowanol PPh¹ | 81.8 |
| 6 | Methyl isobutyl diketimine of diethylene triamine (72.7% solids in MIBK)² | 60.6 |
| 7 | Methyl ethanol amine | 51.7 |
| 8 | Crosslinker³ | 800.7 |
| 9 | 90% Formic acid | 31.4 |
| 10 | DI Water | 989.3 |
| 11 | DI Water | 1273.1 |

| | | |
|---|---|---|
| ¹ Available from DOW chemical company ² Reaction product of diethylene triamine and methyl isobutyl ketone produced according to the procedure in footnote 3 of Example 2 ³ As prepared in example 7 | | |

A procedure for making a cationic amine-functionalized resinous dispersion was performed as follows: Charges 1 through 4 were added to a flask set up for total reflux with stirring under nitrogen. The mixture was heated to a temperature of 132°C and was allowed to exotherm (180°C maximum). The mixture was held for 2 hours and then allowed to cool to 95°C. Charge 5 was added to aid this cooling. At a temperature of 95°C, charges 6 and 7 were added quickly and the mixture was then held at 110°C for one hour. Charge 8 then was added and the reaction mixture held for 60 minutes. 1663.7 grams of the resulting mixture was then poured into a pre-mixed mixture of deionized water (charge 10) and 90% formic acid (charge 9) and the dispersion was held at 35°C with stirring for 1 hour. More deionized water (charge 11) then was added to the dispersion. Methyl isobutyl ketone then was removed from the dispersion under vacuum at a temperature of 60-70°C. The resulting cationic amine-functionalized resinous dispersion had a solids content of 38.81% by weight.

### EXAMPLE 9

### Preparation of a cationic, catalyst free pigment paste

| Ingredient # | Description | Amount (g) |
|---|---|---|
| 1 | Lutensol XP-50¹ | 29.4 |
| 2 | CationicGrind Vehicle 1² | 1314.4 |
| 3 | Grind Vehicle 2³ | 280.0 |
| 4 | Surfynol 104BC⁴ | 20.0 |
| 5 | Deionized Water | 202.0 |
| 6 | CSX-333⁵ | 10.7 |
| 7 | ASP-200⁶ | 346.3 |
| 8 | Tronox-CR800E⁷ | 1016.8 |

| | | |
|---|---|---|
| ¹ a surfactant available from BASF Corporation ² as described in the patent US 8884059 (example 24) ³ as described in the patent US 8884059 (example 23) ⁴ a surfactant available from Evonik Corporation ⁵ carbon black available from Cabot ⁶kaolin clay available from BASF Corporation ⁷ titanium dioxide available from Tronox Inc. | | |

This example describes the preparation of a gray, catalyst free cationic pigment paste. Ingredients 1-5 were added to a 2-liter stainless steel beaker under agitation with a 7.62 cm (3-inch) cowles blade. This mixture was allowed to stir for 15 minutes before the addition of ingredients 6-8. This mixture was agitated for 30 minutes at high speed. This mixture was then added to a Red Head mill along with 283.5 g (10 ounces) of 1.2-1.7 mm Zirconox ceramic media. The paste was milled with cooling for 1 hour to a Hegman reading of 7 ½.

### EXAMPLE 10

### Preparation of a cationic electrodepositable coating composition (DBGA/BCG)

| Ingredient # | Description | Amount (g) |
|---|---|---|
| 1 | Resinous dispersion from example 2 | 701.2 |
| 2 | Polyoxyalkylene-polyepoxide adduct ¹ | 64.7 |
| 3 | Butyl Carbitol formal | 11.6 |
| 4 | BCG-containing Pigment Paste ² | 183.7 |
| 5 | 2-butoxy ethanol | 25.0 |
| 6 | Deionized water | 1513.8 |

| | | |
|---|---|---|
| ¹ As described in Example G of US Pat. No. 4,432,850 ² W9201/N6 cationic gray paste commercially available from PPG Industries, Inc. | | |

This example describes an electrocoat bath composition made using the product of Example 2 and a bicyclic guanidine, (1,5,7-triazabicylo[4,4,0]dec-5-ene), catalyst containing paste W9201/N6, (available from PPG Industries, Inc.). Ingredient 1 was weighed into a 3.79 l (one gallon) plastic container and placed under mild agitation. To this was added 400 grams of Ingredient 6. Ingredients 2,3 and 5 were mixed together in a small beaker and then added to the agitated bath. Ingredient 4 was diluted with 100 grams of Ingredient 6 and this mixture was then added to the agitated bath. The beaker was subsequently rinsed with the remainder of Ingredient 6 and added to the bath. The bath was allowed to stir for 1 hour before coat out. The final bath has a theoretical solids content of 15% by weight and a pigment to binder ratio of 0.15/1. The composition had a measured pH of 5.92 and a conductivity of 1691 µS/cm using an Orion STAR A215 pH/conductivity meter from Thermo Scientific. The paste brings in 0.8% by weight BCG catalyst, based on the paint resin solids.

### EXAMPLE 10A

### Evaluation of cationic electrodepositable coating composition

The electrodepositable coating composition of Example 10 was electrophoretically coated over 50.8 µm (200 gauge) aluminum foil (supplied by Lite Gauge Metals) and a 10.16 cm (4") X 30.48 cm (12") X 0.064 cm (.025") 3003 H14 Mill Finish Aluminum panel (supplied by the Q-Lab Corporation) as substrates. The substrates were immersed into a bath containing the cationic electrodepositable coating composition. Coating conditions for cationic electrodeposition of the coating composition onto both substrates were 175 volts for 2 minutes at a bath temperature of 32.2°C (90°F). Coated substrates were rinsed with deionized water and air dried for a period of at least 30 minutes following electrodeposition. The coated aluminum foil was evaluated for TGA analysis, and the coated aluminum panel was evaluated for cure by solvent rub testing.

### EXAMPLE 11

### Preparation of a cationic electrodepositable coating composition (BGA/BCG)

| Ingredient # | Description | Amount (g) |
|---|---|---|
| 1 | Resinous dispersion from example 5 | 612.3 |
| 2 | Polyoxyalkylene-polyepoxide adduct ¹ | 64.7 |
| 3 | Butyl Carbitol formal | 11.6 |
| 4 | Pigment Paste ² | 183.7 |
| 5 | 2-butoxy ethanol | 25.0 |
| 6 | Deionized water | 1602.7 |

| | | |
|---|---|---|
| ¹ As described in Example G of US Pat. No. 4,432,850 ²W9201/N6 cationic gray paste commercially available from PPG Industries, Inc. | | |

This example describes an electrocoat bath composition made using the product of Example 5 and a bicyclic guanidine, (1,5,7-triazabicylo[4,4,0]dec-5-ene, referred to as "BCG"), catalyst containing paste W9201/N6, (available from PPG Industries, Inc.). Ingredient 1 was weighed into a 3.781 (one gallon) plastic container and placed under mild agitation. To this was added 400 grams of Ingredient 6. Ingredients 2,3 and 5 were mixed together in a small beaker and then added to the agitated bath. Ingredient 4 was diluted with 100 grams of Ingredient 6 and this mixture was then added to the agitated bath. The beaker was subsequently rinsed with the remainder of Ingredient 6 and added to the bath. The bath was allowed to stir for 1 hour before coat out. The final bath has a theoretical solids content of 15% by weight and a pigment to binder ratio of 0.15/1. The composition had a measured pH of 5.85 and a conductivity of 1669 µS/cm using an Orion STAR A215 pH/conductivity meter from Thermo Scientific. The paste brings in 0.8% by weight BCG catalyst, based on the paint resin solids.

### EXAMPLE 11A

### Evaluation of cationic electrodepositable coating composition

The composition of Example 11 was coated over 50.8 µm (200 gauge) aluminum foil, (supplied by Lite Gauge Metals), for TGA analysis and a 10.16 cm (4") X 30.48 cm (12") X 0.064 cm (.025") 3003 H14 Mill Finish Aluminum panel, (supplied by the Q-Lab Corporation), for cure by solvent rub testing. Coating conditions for both substrates were 180 volts for 2 minutes at a bath temperature of 32.2°C (90°F). Coated substrates were rinsed with deionized water and air dried for a period of at least 30 minutes.

### EXAMPLE 12

### Preparation of a cationic electrodepositable coating composition (BL/BCG)

| Ingredient # | Description | Amount (g) |
|---|---|---|
| 1 | Resinous dispersion from example 8 | 644.9 |
| 2 | Polyoxyalkylene-polyepoxide adduct ¹ | 64.7 |
| 3 | Butyl Carbitol formal | 11.6 |
| 4 | Pigment Paste ² | 183.7 |
| 5 | 2-butoxy ethanol | 25.0 |
| 6 | Deionized water | 1570.0 |

| | | |
|---|---|---|
| ¹ As described in Example G of US Pat. No. 4,432,850 ²W9201/N6 cationic gray paste commercially available from PPG Industries, Inc. | | |

This example describes an electrocoat bath composition made using the product of Example 8 and a bicyclic guanidine, (1,5,7-triazabicylo[4,4,0]dec-5-ene, referred to as "BCG"), catalyst containing paste W9201/N6, (available from PPG Industries, Inc.). Ingredient 1 was weighed into a 3.781 (one gallon) plastic container and placed under mild agitation. To this was added 400 grams of Ingredient 6. Ingredients 2,3 and 5 were mixed together in a small beaker and then added to the agitated bath. Ingredient 4 was diluted with 100 grams of Ingredient 6 and this mixture was then added to the agitated bath. The beaker was subsequently rinsed with the remainder of Ingredient 6 and added to the bath. The bath was allowed to stir for 1 hour before coat out. The final bath has a theoretical solids content of 15% by weight and a pigment to binder ratio of 0.15/1. The composition had a measured pH of 6.09 and a conductivity of 1839 µS/cm using an Orion STAR A215 pH/conductivity meter from Thermo Scientific. The paste brings in 0.8% by weight BCG catalyst, based on the paint resin solids.

### EXAMPLE 12A

### Evaluation of cationic electrodepositable coating composition

The composition of Example 12 was coated over 50.8 µm (200 gauge) aluminum foil, (supplied by Lite Gauge Metals), for TGA analysis and a 10.16 cm (4") X 30.48 cm (12") X 0.064 cm (.025") 3003 H14 Mill Finish Aluminum panel, (supplied by the Q-Lab Corporation), for cure by solvent rub testing. Coating conditions for both substrates were 200 volts for 2 minutes at a bath temperature of 32.2°C (90°F). Coated substrates were rinsed with deionized water and air dried for a period of at least 30 minutes.

### COMPARATIVE EXAMPLE 13

### Preparation of a cationic electrodepositable coating composition (DBGA/no catalyst)

| Ingredient # | Description | Amount (g) |
|---|---|---|
| 1 | Resinous dispersion from Example 2 | 738.9 |
| 2 | Polyoxyalkylene-polyepoxide adduct ¹ | 68.2 |
| 3 | Butyl Carbitol formal | 12.3 |
| 4 | Pigment Paste from Example 9 | 116.4 |
| 5 | 2-butoxy ethanol | 25.0 |
| 6 | Deionized water | 1539.2 |

| | | |
|---|---|---|
| ¹ As described in Example G of US Pat. No. 4,432,850 | | |

This example describes an electrocoat bath composition made using the product of Example 2 and a pigment paste, which does not include a curing catalyst according to the present invention. Ingredient 1 was weighed into a 3.781 (one gallon) plastic container and placed under mild agitation. To this was added 400 grams of Ingredient 6. Ingredients 2,3 and 5 were mixed together in a small beaker and then added to the agitated bath. Ingredient 4 was diluted with 100 grams of Ingredient 6 and this mixture was then added to the agitated bath. The beaker was subsequently rinsed with the remainder of Ingredient 6 and added to the bath. The bath was allowed to stir for 1 hour before coat out. The final bath has a theoretical solids content of 15% by weight and a pigment to binder ratio of 0.15/1. The composition had a measured pH of 5.94 and a conductivity of 1377 µS/cm using an Orion STAR A215 pH/conductivity meter from Thermo Scientific.

### COMPARATIVE EXAMPLE 13A

### Evaluation of cationic electrodepositable coating composition

The composition of Comparative Example 13 was coated over 50.8 µm (200 gauge) aluminum foil, (supplied by Lite Gauge Metals), for TGA analysis and a 10.16 cm (4") X 30.48 cm (12") X 0.064 cm (.025") 3003 H14 Mill Finish Aluminum panel, (supplied by the Q-Lab Corporation), for cure by solvent rub testing. Coating conditions for both substrates were 165 volts for 2 minutes at a bath temperature of 32.2°C (90°F). Coated substrates were rinsed with deionized water and air dried for a period of at least 30 minutes.

### COMPARATIVE EXAMPLE 14

### Preparation of a cationic electrodepositable coating composition (BGA/no catalyst)

| Ingredient # | Description | Amount (g) |
|---|---|---|
| 1 | Resinous dispersion from Example 5 | 738.9 |
| 2 | Polyoxyalkylene-polyepoxide adduct ¹ | 68.2 |
| 3 | Butyl Carbitol formal | 12.3 |
| 4 | Pigment Paste from Example 9 | 116.4 |
| 5 | 2-butoxy ethanol | 25.0 |
| 6 | Deionized water | 1539.2 |

| | | |
|---|---|---|
| ¹ As described in Example G of US Pat. No. 4,432,850 | | |

This example describes an electrocoat bath composition made using the product of Example 5 and a pigment paste, which does not include the curing catalyst according to the present invention. Ingredient 1 was weighed into a 3.781 (one gallon) plastic container and placed under mild agitation. To this was added 400 grams of Ingredient 6. Ingredients 2,3 and 5 were mixed together in a small beaker and then added to the agitated bath. Ingredient 4 was diluted with 100 grams of Ingredient 6 and this mixture was then added to the agitated bath. The beaker was subsequently rinsed with the remainder of Ingredient 6 and added to the bath. The bath was allowed to stir for 1 hour before coat out. The final bath has a theoretical solids content of 15% by weight and a pigment to binder ratio of 0.15/1. The composition had a measured pH of 5.75 and a conductivity of 886 µS/cm using an Orion STAR A215 pH/conductivity meter from Thermo Scientific.

### COMPARATIVE EXAMPLE 14A

### Evaluation of cationic electrodepositable coating composition

The composition of Comparative Example 14 was coated over 50.8 µm (200 gauge) aluminum foil, (supplied by Lite Gauge Metals), for TGA analysis and a 10.16 cm (4") X 30.48 cm (12") X 0.064 cm (.025") 3003 H14 Mill Finish Aluminum panel, (supplied by the Q-Lab Corporation), for cure by solvent rub testing. Coating conditions for both substrates were 190 volts for 2 minutes at a bath temperature of 32.2°C (90°F). Coated substrates were rinsed with deionized water and air dried for a period of at least 30 minutes.

### COMPARATIVE EXAMPLE 15

### Preparation of a cationic electrodepositable coating composition (BL/no catalyst)

| Ingredient # | Description | Amount (g) |
|---|---|---|
| 1 | Resinous dispersion from Example 8 | 679.8 |
| 2 | Polyoxyalkylene-polyepoxide adduct ¹ | 68.2 |
| 3 | Butyl Carbitol formal | 12.3 |
| 4 | Pigment Paste from Example 9 | 116.4 |
| 5 | 2-butoxy ethanol | 25.0 |
| 6 | Deionized water | 1598.4 |

| | | |
|---|---|---|
| ¹ As described in Example G of US Pat. No. 4,432,850 | | |

This example describes an electrocoat bath composition made using the product of Example 8 and a pigment paste, which does not include a curing catalyst according to the present invention. Ingredient 1 was weighed into a 3.781 (one gallon) plastic container and placed under mild agitation. To this was added 400 grams of Ingredient 6. Ingredients 2,3 and 5 were mixed together in a small beaker and then added to the agitated bath. Ingredient 4 was diluted with 100 grams of Ingredient 6 and this mixture was then added to the agitated bath. The beaker was subsequently rinsed with the remainder of Ingredient 6 and added to the bath. The bath was allowed to stir for 1 hour before coat out. The final bath has a theoretical solids content of 15% by weight and a pigment to binder ratio of 0.15/1. The composition had a measured pH of 6.04 and a conductivity of 1575 µS/cm using an Orion STAR A215 pH/conductivity meter from Thermo Scientific.

### COMPARATIVE EXAMPLE 15A

### Evaluation of cationic electrodepositable coating composition

The composition of Comparative Example 15 was coated over 50.8 (200 gauge) aluminum foil, (supplied by Lite Gauge Metals), for TGA analysis and a 10.16 cm (4") × 30.48 cm (12") × 0.064 cm (.025") 3003 H14 Mill Finish Aluminum panel, (supplied by the Q-Lab Corporation), for cure by solvent rub testing. Coating conditions for both substrates were 200 volts for 2 minutes at a bath temperature of 32.2°C (90°F). Coated foils were rinsed with deionized water and air dried for a period of at least 30 minutes.

### COMPARATIVE EXAMPLE 16

### Preparation of a cationic electrodepositable coating composition (DBGA/DBTO)

| Ingredient # | Description | Amount (g) |
|---|---|---|
| 1 | Resinous dispersion from Example 2 | 765.1 |
| 2 | Polyoxyalkylene-polyepoxide adduct ¹ | 70.6 |
| 3 | Butyl Carbitol formal | 12.7 |
| 4 | DBTO containing Pigment Paste ² | 102.5 |
| 5 | 2-butoxy ethanol | 25.0 |
| 6 | Deionized water | 1524.1 |

| | | |
|---|---|---|
| ¹ As described in Example G of US Pat. No. 4,432,850 ² E6448 cationic pigment paste commercially available from PPG Industries, Inc. | | |

This example describes an electrocoat bath composition made using the product of Example 2 and a dibutyltin oxide (DBTO) catalyst containing paste. Ingredient 1 was weighed into a 3.781 (one gallon) plastic container and placed under mild agitation. To this was added 400 grams of Ingredient 6. Ingredients 2,3 and 5 were mixed together in a small beaker and then added to the agitated bath. Ingredient 4 was diluted with 100 grams of Ingredient 6 and this mixture was then added to the agitated bath. The beaker was subsequently rinsed with the remainder of Ingredient 6 and added to the bath. The bath was allowed to stir for 1 hour before coat out. The final bath has a theoretical solids content of 15% by weight and a pigment to binder ratio of 0.121/1. The composition had a measured pH of 5.95 and a conductivity of 1410 µS/cm using an Orion STAR A215 pH/conductivity meter from Thermo Scientific. The paste brings in 0.8% DBTO catalyst by weight of tin, based on the paint resin solids.

### COMPARATIVE EXAMPLE 16A

### Evaluation of cationic electrodepositable coating composition

The composition of Example 16 was coated over 50.8 µm (200 gauge) aluminum foil, (supplied by Lite Gauge Metals), for TGA analysis and a 10.16 cm (4") × 30.48 cm (12") × 0.064 cm (.025") 3003 H14 Mill Finish Aluminum panel, (supplied by the Q-Lab Corporation), for cure by solvent rub testing. Coating conditions for both substrates were 165 volts for 2 minutes at a bath temperature of 32.2°C (90°F). Coated substrates were rinsed with deionized water and air dried for a period of at least minutes.

### COMPARATIVE EXAMPLE 17

### Preparation of a cationic electrodepositable coating composition (DBGA/DBTO)

| Ingredient # | Description | Amount (g) |
|---|---|---|
| 1 | Resinous dispersion from Example 5 | 668.2 |
| 2 | Polyoxyalkylene-polyepoxide adduct ¹ | 70.6 |
| 3 | Butyl Carbitol formal | 12.7 |
| 4 | DBTO containing Pigment Paste ² | 102.5 |
| 5 | 2-butoxy ethanol | 25.0 |
| 6 | Deionized water | 1621.1 |

| | | |
|---|---|---|
| ¹ As described in Example G of US Pat. No. 4,432,850 ² E6448 cationic pigment paste commercially available from PPG Industries, Inc. | | |

This example describes an electrocoat bath composition made using the product of Example 5 and a dibutyltin oxide catalyst containing paste. Ingredient 1 was weighed into a 3.781 (one gallon) plastic container and placed under mild agitation. To this was added 400 grams of Ingredient 6. Ingredients 2,3 and 5 were mixed together in a small beaker and then added to the agitated bath. Ingredient 4 was diluted with 100 grams of Ingredient 6 and this mixture was then added to the agitated bath. The beaker was subsequently rinsed with the remainder of Ingredient 6 and added to the bath. The bath was allowed to stir for 1 hour before coat out. The final bath has a theoretical solids content of 15% by weight and a pigment to binder ratio of 0.121/1. The composition had a measured pH of 5.97 and a conductivity of 1781 µS/cm using an Orion STAR A215 pH/conductivity meter from Thermo Scientific. The paste brings in 0.8% DBTO catalyst by weight of tin, based on the paint resin solids.

### COMPARATIVE EXAMPLE 17A

### Evaluation of cationic electrodepositable coating composition

The composition of Example 17 was coated over 50.8 µm (200 gauge) aluminum foil, (supplied by Lite Gauge Metals), for TGA analysis and a 10.16 cm (4") × 30.48 cm (12") × 0.064 cm (.025") 3003 H14 Mill Finish Aluminum panel, (supplied by the Q-Lab Corporation), for cure by solvent rub testing. Coating conditions for both substrates were 150 volts for 2 minutes at a bath temperature of 32.2°C (90°F). Coated substrates were rinsed with deionized water and air dried for a period of at least 30 minutes.

### COMPARATIVE EXAMPLE 18

### Preparation of a cationic electrodepositable coating composition (BL/DBTO)

| Ingredient # | Description | Amount (g) |
|---|---|---|
| 1 | Resinous dispersion from Example 8 | 703.8 |
| 2 | Polyoxyalkylene-polyepoxide adduct ¹ | 70.6 |
| 3 | Butyl Carbitol formal | 12.7 |
| 4 | DBTO containing Pigment Paste ² | 102.5 |
| 5 | 2-butoxy ethanol | 25.0 |
| 6 | Deionized water | 1585.4 |

| | | |
|---|---|---|
| ¹ As described in Example G of US Pat. No. 4,432,850 ² E6448 cationic pigment paste commercially available from PPG Industries, Inc. | | |

This example describes an electrocoat bath composition made using the product of Example 8 and a dibutyltin oxide catalyst containing paste. Ingredient 1 was weighed into a 3.781 (one gallon) plastic container and placed under mild agitation. To this was added 400 grams of Ingredient 6. Ingredients 2,3 and 5 were mixed together in a small beaker and then added to the agitated bath. Ingredient 4 was diluted with 100 grams of Ingredient 6 and this mixture was then added to the agitated bath. The beaker was subsequently rinsed with the remainder of Ingredient 6 and added to the bath. The bath was allowed to stir for 1 hour before coat out. The final bath has a theoretical solids content of 15% by weight and a pigment to binder ratio of 0.121/1. The composition had a measured pH of 6.17 and a conductivity of 2157 µS/cm using an Orion STAR A215 pH/conductivity meter from Thermo Scientific. The paste brings in 0.8% DBTO catalyst by weight of tin, based on the paint resin solids.

### COMPARATIVE EXAMPLE 18A

### Evaluation of cationic electrodepositable coating composition

The composition of Example 18 was coated over 50.8 µm (200 gauge) aluminum foil, (supplied by Lite Gauge Metals), for TGA analysis and a 10.16 cm (4") × 30.48 cm (12") × 0.064 cm (.025") 3003 H14 Mill Finish Aluminum panel, (supplied by the Q-Lab Corporation), for cure by solvent rub testing. Coating conditions for both substrates were 210 volts for 2 minutes at a bath temperature of 32.2°C (90°F). Coated substrates were rinsed with deionized water and air dried for a period of at least 30 minutes.

### COMPARATIVE EXAMPLE 19

### Preparation of a cationic electrodepositable coating composition (DBGA/ZA)

| Ingredient # | Description | Amount (g) |
|---|---|---|
| 1 | Resinous dispersion from Example 2 | 738.9 |
| 2 | Polyoxyalkylene-polyepoxide adduct ¹ | 32.7 |
| 3 | Butyl Carbitol formal | 12.3 |
| 4 | Zinc amidine containing polyoxyalkylene-polyepoxide adduct² | 44.3 |
| 5 | Pigment Paste from Example 9 | 116.4 |
| 6 | 2-butoxy ethanol | 25.0 |
| 7 | Deionized water | 1530.3 |

| | | |
|---|---|---|
| ¹ As described in Example G of US Pat. No. 4,432,850 ² As described in Example 5 of US Pat. No. 9,534,074 | | |

This example describes an electrocoat bath composition made using the product of Example 2, a non-catalyst containing pigment paste and a zinc amidine catalyst incorporated in a polyoxyalkylene-polyepoxide adduct. Ingredient 1 was weighed into a 3.781 (one gallon) plastic container and placed under mild agitation. To this was added 400 grams of Ingredient 7. Ingredients 2,3,4 and 6 were mixed together in a small beaker and then added to the agitated bath. Ingredient 5 was diluted with 100 grams of Ingredient 7 and this mixture was then added to the agitated bath. The beaker was subsequently rinsed with the remainder of Ingredient 7 and added to the bath. The bath was allowed to stir for 1 hour before coat out. The final bath has a theoretical solids content of 15% by weight and a pigment to binder ratio of 0.15/1. The composition had a measured pH of 5.84 and a conductivity of 1986 µS/cm using an Orion STAR A215 pH/conductivity meter from Thermo Scientific. The obtained bath contained 0.8% zinc amidine by weight, based on the paint resin solids.

### COMPARATIVE EXAMPLE 19A

### Evaluation of cationic electrodepositable coating composition

The composition of Example 19 was coated over 50.8 µm (200 gauge) aluminum foil, (supplied by Lite Gauge Metals), for TGA analysis and a 10.16 cm (4") × 30.48 cm (12") × 0.064 cm (.025") 3003 H14 Mill Finish Aluminum panel, (supplied by the Q-Lab Corporation), for cure by solvent rub testing. Coating conditions for both substrates were 165 volts for 2 minutes at a bath temperature of 32.2°C (90°F). Coated foils were rinsed with deionized water and air dried for a period of at least 30 minutes.

### COMPARATIVE EXAMPLE 20

### Preparation of a cationic electrodepositable coating composition (BGA/ZA)

| Ingredient # | Description | Amount (g) |
|---|---|---|
| 1 | Resinous dispersion from Example 5 | 660.8 |
| 2 | Polyoxyalkylene-polyepoxide adduct ¹ | 32.7 |
| 3 | Butyl Carbitol formal | 12.3 |
| 4 | Zinc amidine containing polyoxyalkylene-polyepoxide adduct² | 44.3 |
| 5 | Pigment Paste from Example 9 | 116.4 |
| 6 | 2-butoxy ethanol | 25.0 |
| 7 | Deionized water | 1608.4 |

| | | |
|---|---|---|
| ¹ As described in Example G of US Pat. No. 4,432,850 ² As described in Example 5 of US Pat. No. 9,534,074 | | |

This example describes an electrocoat bath composition made using the product of Example 5, a non-catalyst containing pigment paste and a zinc amidine catalyst incorporated in a polyoxyalkylene-polyepoxide adduct. Ingredient 1 was weighed into a 3.781 (one gallon) plastic container and placed under mild agitation. To this was added 400 grams of Ingredient 7. Ingredients 2,3,4 and 6 were mixed together in a small beaker and then added to the agitated bath. Ingredient 5 was diluted with 100 grams of Ingredient 7 and this mixture was then added to the agitated bath. The beaker was subsequently rinsed with the remainder of Ingredient 7 and added to the bath. The bath was allowed to stir for 1 hour before coat out. The final bath has a theoretical solids content of 15% by weight and a pigment to binder ratio of 0.15/1. The composition had a measured pH of 5.65 and a conductivity of 1738 µS/cm using an Orion STAR A215 pH/conductivity meter from Thermo Scientific. The obtained bath contained 0.8% zinc amidine by weight, based on the paint resin solids.

### COMPARATIVE EXAMPLE 20A

### Evaluation of cationic electrodepositable coating composition

The composition of Example 20 was coated over 50.8 µm (200 gauge) aluminum foil, (supplied by Lite Gauge Metals), for TGA analysis and a 10.16 cm (4") × 30.48 cm (12") × 0.064 cm (.025") 3003 H14 Mill Finish Aluminum panel, (supplied by the Q-Lab Corporation), for cure by solvent rub testing. Coating conditions for both substrates were 225 volts for 2 minutes at a bath temperature of 32.2°C (90°F). Coated substrates were rinsed with deionized water and air dried for a period of at least 30 minutes.

### COMPARATIVE EXAMPLE 21

### Preparation of a cationic electrodepositable coating composition (BL/ZA)

| Ingredient # | Description | Amount (g) |
|---|---|---|
| 1 | Resinous dispersion from example 8 | 717.9 |
| 2 | Polyoxyalkylene-polyepoxide adduct ¹ | 32.7 |
| 3 | Butyl Carbitol formal | 12.3 |
| 4 | Zinc amidine containing polyoxyalkylene-polyepoxide adduct² | 44.3 |
| 5 | Pigment Paste from Example 9 | 116.4 |
| 6 | 2-butoxy ethanol | 25.0 |
| 7 | Deionized water | 1551.4 |

| | | |
|---|---|---|
| ¹ As described in Example G of US Pat. No. 4,432,850 ² As described in Example 5 of US Pat. No. 9,534,074 | | |

This example describes an electrocoat bath composition made using the product of Example 8, a non-catalyst containing pigment paste and a zinc amidine catalyst incorporated in a polyoxyalkylene-polyepoxide adduct. Ingredient 1 was weighed into a 3.781 (one gallon) plastic container and placed under mild agitation. To this was added 400 grams of Ingredient 7. Ingredients 2,3,4 and 6 were mixed together in a small beaker and then added to the agitated bath. Ingredient 5 was diluted with 100 grams of Ingredient 7 and this mixture was then added to the agitated bath. The beaker was subsequently rinsed with the remainder of Ingredient 7 and added to the bath. The bath was allowed to stir for 1 hour before coat out. The final bath has a theoretical solids content of 15% by weight and a pigment to binder ratio of 0.15/1. The composition had a measured pH of 5.91 and a conductivity of 1963 µS/cm using an Orion STAR A215 pH/conductivity meter from Thermo Scientific. The obtained bath contained 0.8% zinc amidine by weight, based on the paint resin solids.

### COMPARATIVE EXAMPLE 21A

### Evaluation of cationic electrodepositable coating composition

The composition of Example 21 was coated over 50.8 µm (200 gauge) aluminum foil, (supplied by Lite Gauge Metals), for TGA analysis and a 10.16 cm (4") × 30.48 cm (12") × 0.064 cm (.025") 3003 H14 Mill Finish Aluminum panel, (supplied by the Q-Lab Corporation), for cure by solvent rub testing. Coating conditions for both substrates were 225 volts for 2 minutes at a bath temperature of 32.2°C (90°F). Coated substrates were rinsed with deionized water and air dried for a period of at least 30 minutes.

### EXAMPLE 22

### Preparation of a cationic electrodepositable coating composition (DBGA/Bi)

| Ingredient # | Description | Amount (g) |
|---|---|---|
| 1 | Resinous dispersion from Example 2 | 730.8 |
| 2 | Polyoxyalkylene-polyepoxide adduct ¹ | 68.2 |
| 3 | Butyl Carbitol formal | 12.3 |
| 4 | Bismuth methane sulfonic acid solution² | 151.8 |
| 5 | Pigment Paste from Example 9 | 116.4 |
| 6 | 2-butoxy ethanol | 25.0 |
| 7 | Deionized water | 1395.5 |

| | | |
|---|---|---|
| ¹ As described in Example G of US Pat. No. 4,432,850 ² A solution of 1.92 wt. % bismuth oxide, 1.28 wt. % methane sulfonic acid and 96.8 wt. % deionized water | | |

This example describes an electrocoat bath composition made using the product of Example 2, a non-catalyst containing pigment paste and a bismuth-containing curing catalyst incorporated as a bismuth methane sulfonic acid solution. Ingredient 1 was weighed into a 3.78 l (one gallon) plastic container and placed under mild agitation. To this was added 400 grams of Ingredient 7. Ingredients 2,3 and 6 were mixed together in a small beaker and then added to the agitated bath. Ingredient 4 was diluted with 200 grams of Ingredient 7 and then added slowly to Ingredient 5 while under agitation. This mixture was stirred for 15 minutes before being added to the agitated bath. The beaker holding this mixture was subsequently rinsed with the remainder of Ingredient 7 and added to the bath. The bath was allowed to stir for 1 hour before coat out. The final bath has a theoretical solids content of 15% by weight and a pigment to binder ratio of 0.15/1. The composition had a measured pH of 5.65 and a conductivity of 1961 µS/cm using an Orion STAR A215 pH/conductivity meter from Thermo Scientific. The bath contained 0.8% bismuth-containing curing catalyst by weight bismuth, based on the paint resin solids.

### EXAMPLE 22A

### Evaluation of cationic electrodepositable coating composition

The composition of Example 22 was coated over 50.8 µm (200 gauge) aluminum foil, (supplied by Lite Gauge Metals), for TGA analysis and a 10.16 cm (4") × 30.48 cm (12") × 0.064 cm (.025") 3003 H14 Mill Finish Aluminum panel, (supplied by the Q-Lab Corporation), for cure by solvent rub testing. Coating conditions for both substrates were 165 volts for 2 minutes at a bath temperature of 32.2°C (90°F). Coated substrates were rinsed with deionized water and air dried for a period of at least 30 minutes.

### EXAMPLE 23

### Preparation of a cationic electrodepositable coating composition (BGA/Bi)

| Ingredient # | Description | Amount (g) |
|---|---|---|
| 1 | Resinous dispersion from Example 5 | 653.6 |
| 2 | Polyoxyalkylene-polyepoxide adduct ¹ | 68.2 |
| 3 | Butyl Carbitol formal | 12.3 |
| 4 | Bismuth methane sulfonic acid solution² | 151.8 |
| 5 | Pigment Paste from Example 9 | 116.4 |
| 6 | 2-butoxy ethanol | 25.0 |
| 7 | Deionized water | 1472.7 |

| | | |
|---|---|---|
| ¹ As described in Example G of US Pat. No. 4,432,850 ² a solution of 1.92 wt. % bismuth oxide, 1.28 wt. % methane sulfonic acid and 96.8 wt. % deionized water | | |

This example describes an electrocoat bath composition made using the product of Example 5, a non-catalyst containing pigment paste and a bismuth-containing curing catalyst incorporated as a bismuth methane sulfonic acid solution. Ingredient 1 was weighed into a 3.78 l (one gallon) plastic container and placed under mild agitation. To this was added 400 grams of Ingredient 7. Ingredients 2,3 and 6 were mixed together in a small beaker and then added to the agitated bath. Ingredient 4 was diluted with 200 grams of Ingredient 7 and then added slowly to Ingredient 5 while under agitation. This mixture was stirred for 15 minutes before being added to the agitated bath. The beaker holding this mixture was subsequently rinsed with the remainder of Ingredient 7 and added to the bath. The bath was allowed to stir for 1 hour before coat out. The final bath has a theoretical solids content of 15% and a pigment to binder ratio of 0.15/1. The composition had a measured pH of 5.64 and a conductivity of 1670 µS/cm using an Orion STAR A215 pH/conductivity meter from Thermo Scientific. The bath contains 0.8% bismuth-containing curing catalyst by weight bismuth, based on the paint resin solids.

### EXAMPLE 23A

### Evaluation of cationic electrodepositable coating composition

The composition of Example 23 was coated over 50.8 µm (200 gauge) aluminum foil, (supplied by Lite Gauge Metals), for TGA analysis and a 10.16 cm (4") × 30.48 cm (12") × 0.064 cm (.025") 3003 H14 Mill Finish Aluminum panel, (supplied by the Q-Lab Corporation), for cure by solvent rub testing. Coating conditions for both substrates were 200 volts for 2 minutes at a bath temperature of 32.2°C (90°F). Coated substrates were rinsed with deionized water and air dried for a period of at least 30 minutes.

### EXAMPLE 24

### Preparation of a cationic electrodepositable coating composition (BL/Bi)

| Ingredient # | Description | Amount (g) |
|---|---|---|
| 1 | Resinous dispersion from Example 8 | 710.1 |
| 2 | Polyoxyalkylene-polyepoxide adduct ¹ | 68.2 |
| 3 | Butyl Carbitol formal | 12.3 |
| 4 | Bismuth methane sulfonic acid solution² | 151.8 |
| 5 | Pigment Paste from Example 9 | 116.4 |
| 6 | 2-butoxy ethanol | 25.0 |
| 7 | Deionized water | 1416.7 |

| | | |
|---|---|---|
| ¹ As described in Example G of US Pat. No. 4,432,850 ² a solution of 1.92 wt. % bismuth oxide, 1.28 wt. % methane sulfonic acid and 96.8 wt. % deionized water | | |

This example describes an electrocoat bath composition made using the product of Example 8, a non-catalyst containing pigment paste and a bismuth-containing curing catalyst incorporated as a bismuth methane sulfonic acid solution. Ingredient 1 was weighed into a 3.78 l (one gallon) plastic container and placed under mild agitation. To this was added 400 grams of Ingredient 7. Ingredients 2,3 and 6 were mixed together in a small beaker and then added to the agitated bath. Ingredient 4 was diluted with 200 grams of Ingredient 7 and then added slowly to Ingredient 5 while under agitation. This mixture was stirred for 15 minutes before being added to the agitated bath. The beaker holding this mixture was subsequently rinsed with the remainder of Ingredient 7 and added to the bath. The bath was allowed to stir for 1 hour before coat out. The final bath has a theoretical solids content of 15% by weight and a pigment to binder ratio of 0.15/1. The composition had a measured pH of 5.83 and a conductivity of 1947 µS/cm using an Orion STAR A215 pH/conductivity meter from Thermo Scientific. The bath contains 0.8% bismuth-containing curing catalyst by weight bismuth, based on the paint resin solids.

### EXAMPLE 24A

### Evaluation of cationic electrodepositable coating composition

The composition of Example 24 was coated over 50.8 µm (200 gauge) aluminum foil, (supplied by Lite Gauge Metals), for TGA analysis and a 10.16 cm (4") × 30.48 cm (12") × 0.064 cm (.025") 3003 H14 Mill Finish Aluminum panel, (supplied by the Q-Lab Corporation), for cure by solvent rub testing. Coating conditions for both substrates were 200 volts for 2 minutes at a bath temperature of 32.2°C (90°F). Coated substrates were rinsed with deionized water and air dried for a period of at least 30 minutes.

### EXAMPLE 25

### Preparation of a cationic amine-functionalized resinous dispersion using 100% ketimine and a butyl glycolamide blocked polyisocyanate curing agent

| # | Material | Amount (g) |
|---|---|---|
| 1 | Epon 828 | 269.0 |
| 2 | Bisphenol A | 117.9 |
| 3 | Methyl isobutyl ketone | 35.3 |
| 4 | Ethyl triphenyl phosphonium bromide | 0.27 |
| 5 | Dowanol PPh¹ | 38.2 |
| 6 | Methyl isobutyl diketimine of diethylene triamine (72.7% solids in MIBK)² | 148.9 |
| 7 | Crosslinker³ | 401.2 |
| 8 | 90% Formic acid | 21.7 |
| 9 | DI Water | 370.6 |
| 10 | DI Water | 804.3 |

| | | |
|---|---|---|
| ¹ Available from DOW chemical company ² Reaction product of diethylene triamine and methyl isobutyl ketone produced according to the procedure in footnote 3 of Example 2 ³ As prepared in the Example 4 | | |

Charges 1 through 4 were added to a flask set up for total reflux with stirring under nitrogen. The mixture was heated to a temperature of 132°C and was allowed to exotherm (180°C maximum). The mixture was held for 2 hours and then allowed to cool to 95°C. Charge 5 was added to aid this cooling. At a temperature of 95°C, charge 6 was added quickly and the mixture was then held at 110°C for one hour. Charge 7 then was added and the reaction mixture held for 60 minutes. 903.4grams of the resulting mixture was then poured into a pre-mixed mixture of deionized water (charge 9) and 90% formic acid (charge 8) held at 35°C and the dispersion was stirred for 1 hour. More deionized water (charge 10) then was added to the dispersion. Methyl isobutyl ketone then was removed from the dispersion under vacuum at a temperature of 60-70°C. The resulting cationic amine-functionalized resinous dispersion had a solids content of 37.84% by weight.

### EXAMPLE 26

### Preparation of a cationic electrodepositable coating composition (100% Diketimine/BGA/BCG)

| Ingredient # | Description | Amount (g) |
|---|---|---|
| 1 | Resinous dispersion from Example 25 | 661.5 |
| 2 | Polyoxyalkylene-polyepoxide adduct ¹ | 64.7 |
| 3 | Butyl Carbitol formal | 11.6 |
| 4 | Pigment Paste ² | 183.7 |
| 5 | 2-butoxy ethanol | 25.0 |
| 6 | Deionized water | 1553.5 |

| | | |
|---|---|---|
| ¹ As described in Example G of US Pat. No. 4,432,850 ² W9201/N6 cationic gray paste commercially available from PPG Industries, Inc. | | |

This example describes an electrocoat bath composition made using the product of Example 25 and a bicyclic guanidine, (1,5,7-triazabicylo[4,4,0]dec-5-ene, referred to as "BCG"), catalyst containing paste W9201/N6, (available from PPG Industries, Inc.). Ingredient 1 was weighed into a 3.781 (one gallon) plastic container and placed under mild agitation. To this was added 400 grams of Ingredient 6. Ingredients 2,3 and 5 were mixed together in a small beaker and then added to the agitated bath. Ingredient 4 was diluted with 100 grams of Ingredient 6 and this mixture was then added to the agitated bath. The beaker was subsequently rinsed with the remainder of Ingredient 6 and added to the bath. The bath was allowed to stir for 1 hour before coat out. The final bath has a theoretical solids content of 15% by weight and a pigment to binder ratio of 0.15/1. The composition had a measured pH of 7.45 and a conductivity of 2297 µS/cm using an Orion STAR A215 pH/conductivity meter from Thermo Scientific. The paste brings in 0.8% by weight BCG curing catalyst, based on the paint resin solids.

### EXAMPLE 26A

### Evaluation of cationic electrodepositable coating composition

The composition of Example 26 was coated over 50.8 µm (200 gauge) aluminum foil, (supplied by Lite Gauge Metals), for TGA analysis and a 10.16 cm (4") × 30.48 cm (12") × 0.064 cm (.025") 3003 H14 Mill Finish Aluminum panel, (supplied by the Q-Lab Corporation), for cure by solvent rub testing. Coating conditions for both substrates were 210 volts for 2 minutes at a bath temperature of 32.2°C (90°F). Coated substrates were rinsed with deionized water and air dried for a period of at least 30 minutes.

### EXAMPLE 27

### Synthesis of 2-Ethylhexyllactamide from meso lactide and 2-ethylhexylamine

2-Ethylhexyllactamide was prepared by charging 277.45 grams of a meso-lactide (Ingeo^{™} lactide M3002 was commercial available from NatureWorks LLC) to a 1000-mL, 4-necked round bottom flask equipped with a stirrer, a condenser, a nitrogen inlet, and a thermocouple. Agitation and a nitrogen flow of 5663 cm³ (0.2 standard cubic feet (scft)) / minute were started. 497.61 grams of 2-ethylhexylamine was added to the flask over 2 hours at a rate such that the reactor temperature did not exceed 90°C. After completion of the addition, the reaction mixture was heated to 100°C and held for 5 hours until the MEQ amine was less than 0.2 as measured by titration using a Metrohm 751 PGPD Titrino with 0.1 N Perchloric acid in glacial acetic acid as the titration reagent. A slightly yellow liquid compound was obtained. This product was used for making crosslinker without further purification.

### EXAMPLE 28

### Preparation of 2-Ethylhexyllactamide ("EHL") Blocked Polyisocyanate Curing Agent (TDI/TMP/EHL = 10/5/5)

| # | Material | Amount (g) |
|---|---|---|
| 1 | Toluene diisocyanate | 298.34 |
| 2 | Methyl isobutyl ketone | 164.60 |
| 3 | Dibutyltin dilaurate | 0.34 |
| 4 | Trimethylol propane | 76.88 |
| 5 | Methyl isobutyl ketone | 20.58 |
| 6 | 2-ethyl hexyl lactamide¹ | 350.0 |
| 7 | Methyl isobutyl ketone | 44.58 |
| 8 | Bisphenol A polyol | 84.70 |
| 9 | Dowanol PPH² | 112.99 |
| 10 | Methyl isobutyl ketone | 3.95 |

| | | |
|---|---|---|
| ¹ As prepared in Example 27 ²Available from DOW Chemicals | | |

Ingredients 1, 2 and 3 were charged to a flask with nitrogen and heated to 35°C. Charge 4 was added in four equal portions and the reaction was held for 30 minutes after each addition. Following addition of charge 4, the flask was rinsed with charge 5 and held at 95°C for 1 hour. The mixture was then allowed to cool to 70°C and then charge 6 was added over two hours while keeping the reaction temperature below 100°C. After the addition of charge 6, the reactor was held at 105°C for 1 hour. The hold was continued until no isocyanate peak remained at 2259 cm⁻¹ as measured by a Thermo Scientific Nicolet iS5 FT-IR Spectrometer. Then charges 7, 8, 9 and 10 were added and the reaction was held for 30 minutes.

### EXAMPLE 29

### Preparation of a cationic amine-functionalized resinous dispersion using a 2-ethylhexyllactamide blocked polyisocyanate curing agent

| # | Material | Amount (g) |
|---|---|---|
| 1 | Epon 828 | 267.5 |
| 2 | Bisphenol A | 117.2 |
| 3 | Methyl isobutyl ketone | 35.1 |
| 4 | Ethyl triphenyl phosphonium bromide | 0.27 |
| 5 | Dowanol PPh¹ | 38.0 |
| 6 | Methyl isobutyl diketimine of diethylene triamine (72.7% solids in MIBK)² | 28.1 |
| 7 | Methyl ethanol amine | 24.0 |
| 8 | Crosslinker³ | 470.1 |
| 9 | 90% Formic acid | 15.3 |
| 10 | DI Water | 447.6 |
| 11 | DI Water | 635.3 |

| | | |
|---|---|---|
| ¹ Available from DOW chemical company ² Reaction product of diethylene triamine and methyl isobutyl ketone produced according to the procedure in footnote 3 of Example 2 ³ As prepared in the Example 28 | | |

Charges 1 through 4 were added to a flask set up for total reflux with stirring under nitrogen. The mixture was heated to a temperature of 132°C and was allowed to exotherm (180°C maximum). The mixture was held for 2 hours and then allowed to cool to 95°C. Charge 5 was added to aid this cooling. At a temperature of 95°C, charge 6 and 7 were added quickly and the mixture was then held at 110°C for one hour. Charge 8 then was added and the reaction mixture held for 60 minutes. 1706.1grams of the resulting mixture was then poured into a pre-mixed mixture of deionized water (922.3 g) and 90% formic acid (31.6 g) held at 35°C and the dispersion was stirred for 1 hour. More deionized water (1140.1 g) then was added to the dispersion. Methyl isobutyl ketone then was removed from the dispersion under vacuum at a temperature of 60-70°C. The resulting cationic amine-functionalized resinous dispersion had a solids content of 37.49% by weight.

### EXAMPLE 30

### Preparation of a cationic electrodepositable coating composition (EHLBCG)

| Ingredient # | Description | Amount (g) |
|---|---|---|
| 1 | Resinous dispersion from Example 29 | 667.7 |
| 2 | Polyoxyalkylene-polyepoxide adduct ¹ | 64.7 |
| 3 | Butyl Carbitol formal | 11.6 |
| 4 | Pigment Paste ² | 183.7 |
| 5 | 2-butoxy ethanol | 25.0 |
| 6 | Deionized water | 1547.3 |

| | | |
|---|---|---|
| ¹ As described in Example G of US Pat. No. 4,432,850 ² W9201/N6 cationic gray paste commercially available from PPG Industries, Inc. | | |

This example describes an electrocoat bath composition made using the product of Example 30 and a bicyclic guanidine, (1,5,7-triazabicylo[4,4,0]dec-5-ene, referred to as "BCG"), catalyst containing paste W9201/N6, (available from PPG Industries, Inc.). Ingredient 1 was weighed into a 3.781 (one gallon) plastic container and placed under mild agitation. To this was added 400 grams of Ingredient 6. Ingredients 2,3 and 5 were mixed together in a small beaker and then added to the agitated bath. Ingredient 4 was diluted with 100 grams of Ingredient 6 and this mixture was then added to the agitated bath. The beaker was subsequently rinsed with the remainder of Ingredient 6 and added to the bath. The bath was allowed to stir for 1 hour before coat out. The final bath has a theoretical solids content of 15% by weight and a pigment to binder ratio of 0.15/1. The composition had a measured pH of 6.04 and a conductivity of 1831 µS/cm using an Orion STAR A215 pH/conductivity meter from Thermo Scientific. The paste brings in 0.8% by weight BCG curing catalyst, based on the paint resin solids.

### EXAMPLE 30A

### Evaluation of cationic electrodepositable coating composition

The composition of Example 30 was coated over 50.8 µm (200 gauge) aluminum foil, (supplied by Lite Gauge Metals), for TGA analysis and a 10.16 cm (4") × 30.48 cm (12") × 0.064 cm (.025") 3003 H14 Mill Finish Aluminum panel, (supplied by the Q-Lab Corporation), for cure by solvent rub testing. Coating conditions for both substrates were 160 volts for 2 minutes at a bath temperature of 32.2°C (90°F). Coated substrates were rinsed with deionized water and air dried for a period of at least 30 minutes.

### EXAMPLE 31

### Cure evaluation results for electrodepositable coatings

The electrodepositable coatings coated onto 10.16 cm (4") × 30.48 cm (12") × 0.064 cm (.025") 3003 H14 Mill Finish Aluminum panels for Examples 10, 11, 12, 13, 14, 15, 16, 17, 18, 19, 20, 21, 22, 23, 24, 26, and 30 by the methods set forth above were baked at varying temperatures with intervals of 5 or 10 degrees in the range of 90°C to 180°C with a fixed bake time of 10 minutes using an electric oven (Despatch Industries, model LFD-1-42-2). Each of the panels had a dry film thickness between 25.4 to 30.5 microns (1.0 to 1.2 mils). The baked electrodeposited coatings were double rubbed with a WYPALL X80 disposable paper wipe manufactured by Kimberly-Clark soaked with excess amount of acetone. The rubs are counted as a double rub (one rub forward and rub backward constitutes a double rub). The cure temperature (T_{cure}) was determined for the bake temperature that leads to an electrodeposited coating with no physical damage to the coating after 100 double rubs with acetone. This test method is referred to herein as the DOULBE RUB TEST METHOD. The results are summarized in Table 1 below as T_{cure}.

The electrodepositable coatings coated on 50.8 µm (200-gauge) aluminum foils for Examples 10, 11, 12, 16, 17, 18, 19, 20, 21, 22, 23, 24, 26, and 30 by the methods set forth above were used for non-isothermal thermogravimetric analysis ("TGA") using a thermogravimetric analyzer (TGA Q500, TA Instruments, Inc.). The TGA data was collected at four different ramping rates of 2°C/min, 5°C/min, 10°C/min, and 20°C/min in the temperature range from 30°C to 400°C. It is generally understood that the unblocking reaction of blocked isocyanates in crosslinkers has a direct impact on the crosslinking reaction of blocked isocyanates and polymer systems containing hydroxyl or amine groups. The theory behind the thermogravimetric analysis is that the weight loss is the result of the blocking agent deblocking from the isocyanato group on the polyisocyanate and volatilizing out of the coating layer leading to weight loss from the coating layer. The TGA data measures the unblocking reaction profile from the 1^{st} derivative weight loss profile over the temperature range to determine the crosslinking reaction temperature. This test method is referred to herein as the TGA METHOD. The results are summarized in Table 1 below as T_{peak.}

**TABLE 1**

| Example | Blocking Agent | Catalyst | T_{cure} (°C)¹ | Tₚₑₐₖ (°C)² |
|---|---|---|---|---|
| 10 | DBGA | BCG | 140 | 140 |
| 11 | BGA | BCG | 120 | 131 |
| 12 | BL | BCG | 125 | 131 |
| 13 | DBGA | None | 170 | 171 |
| 14 | BGA | None | 160 | 159 |
| 15 | BL | None | 180 | 178 |
| 16 | DBGA | DBTO | 140 | 143 |
| 17 | BGA | DBTO | 140 | 147 |
| 18 | BL | DBTO | 160 | 165 |
| 19 | DBGA | Zinc amidine | 135 | 137 |
| 20 | BGA | Zinc amidine | 140 | 145 |
| 21 | BL | Zinc amidine | 160 | 157 |
| 22 | DBGA | Bismuth | 130 | 131 |
| 23 | BGA | Bismuth | 130 | 139 |
| 24 | BL | Bismuth | 150 | 150 |
| 26 | BGA (100% ketimine) | BCG | 95 | 130 |
| 30 | EHL | BCG | 125 | 137 |

| | | | | |
|---|---|---|---|---|
| ¹ T_{cure}: Bake temperature leads to an electrodepositable coating with no physical damage after 100 double rubs with acetone, i.e., the DOULBE RUB TEST METHOD. ² Tₚₑₐₖ: Peak temperature of the 1^{st} derivative weight loss profile corresponding to the deblocking reaction of the blocked isocyanate crosslinkers from a TGA run with 5°C/min, i.e., the TGA METHOD. | | | | |

The results provided in Table 1 demonstrate the surprising results of the coating compositions described herein. Examples 13-15 are comparative examples showing the cure performance of coating compositions using glycolamide and lactamide blocked polyisocyanates with no catalyst. Examples 16-18 are comparative examples showing the improvement of cure performance when a tin catalyst is included in the coating compositions with the dibutylglycolamide blocked polyisocyanate showing the most dramatic improvement. Examples 19-21 are comparative examples showing the improvement of cure performance when a zinc amidine catalyst is included in the coating compositions with performance comparable to the tin catalyst and with the dibutylglycolamide blocked polyisocyanate showing the most dramatic improvement. Examples 22-24 demonstrate further cure improvement over tin using a bismuth-containing curing catalyst in the coating composition. Each of the glycolamide and lactamide blocked polyisocyanates demonstrate improved cure performance over the tin catalyzed coating compositions. Examples 11 and 12 show dramatic improvement over tin catalyzed coating compositions for the butylglycolamide and butyl lactamide blocked polyisocyanates with a guanidine catalyst. Example 30 likewise demonstrates low-cure performance for a coating composition including a 2-ethylhexyllactamide blocked polyisocyanate and a guanidine catalyst. Example 26 demonstrates that increasing the amount of ketimine used in preparing the film-forming polymer results in a corresponding decrease in the cure temperature.

There is some discrepancy between the DOUBLE RUB TEST METHOD and TGA METHOD, particularly for cure temperatures of less than 130°C as measured by the DOUBLE RUB TEST METHOD. As discussed above, the TGA METHOD measures the weight loss of the film that corresponds to the blocking agent leaving the film. In order for weight loss to occur, the blocking agent must volatilize. It is hypothesized that temperature at which the deblocking reaction occurs may be less than the temperature required to volatilize the blocking agent.

### EXAMPLE 33

### Synthesis of Racemic n-Butyllactamide

936.92 grams of mono-N-butylamine (available from Eastman Chemical Company) was charged to a 5L, 4-necked round bottom flask equipped with a stirrer, a condenser, a nitrogen inlet, and a thermocouple. Agitation and a nitrogen flow of 5663 cm³ (0.2 standard cubic feet (scft)) / minute were started. 932.48 grams of meso lactide (Ingeo^{™} Lactide M3002, available from NatureWorks LLC) was added to the flask over 3.5 hours at a rate such that the reactor temperature did not exceed 40 °C. An ice bath was placed under the flask during the addition of meso lactide to control the reaction temperature. After completion of the meso lactide addition, the reaction mixture was heated to 70 °C and held for 4 hours until the MEQ amine was less than 0.2 as measured by titration using a Metrohm 751 PGPD Titrino with 0.1 N Perchloric acid in glacial acetic acid as the titration reagent. A slightly yellow liquid compound was obtained. This product was used for making the crosslinker of Example 34 without further purification.

### EXAMPLE 34

### Synthesis of Polyisocyanate Crosslinker Blocked with Racemic n-Butyllactamide

| Ingredients | Amount (g) |
|---|---|
| Dibutyltin dilaurate | 0.56 |
| Racemic-n-butyllactamide from Example 33 | 584.4 |
| Methyl isobutyl ketone | 160.7 |
| RUBINATE^{®} M (polyisocyanate)³ | 540.0 |
| Methyl isobutyl ketone | 214.3 |
| Butoxy ethoxy ethanol | 10.0 |
| Butoxy ethoxy ethanol | 10.0 |

| | |
|---|---|
| ³ Polymeric MDI commercially available from Huntsman Corporation | |

Racemic-n-butyl lactamide, methyl isobutyl ketone and dibutyltin dilaurate were charged to a 5L flask under nitrogen at room temperature. The reaction mixture was then heated to 55°C. Polymeric MDI (RUBINATE^{®} M) was then added dropwise over 71 minutes while keeping the temperature of the reaction mixture below 100°C. A second addition of methyl isobutyl ketone was then added. The reaction mixture was held for approximately 272 minutes until no isocyanate peak remained at 2259 cm⁻¹ as measured by a Thermo Scientific Nicolet iS5 FT-IR Spectrometer with two additions of 10.0 g of butoxy ethoxy ethanol occurring at 60 minutes and 120 minutes to cap remaining free isocyanato groups. The butoxy ethoxy ethanol capped approximately 3% of the isocyanato groups.

### EXAMPLE 35

### Preparation of a cationic amine-functionalized resinous dispersion

A cationic amine-functionalized resinous dispersion was prepared as follows:

| Charge | Material | Amount (g) |
|---|---|---|
| 1 | EPON 828 | 635.5 |
| 2 | Bisphenol A | 278.5 |
| 3 | Methyl isobutyl ketone | 83.3 |
| 4 | Ethyl triphenyl phosphonium iodide | 0.64 |
| 5 | Dowanol PPh¹ | 90.2 |
| 6 | Methyl isobutyl diketimine of diethylene triamine (72.7% solids in MIBK)² | 66.8 |
| 7 | Methyl ethanol amine | 57.0 |
| 8 | Crosslinker from Example 34 | 1008.6 |
| | TOTAL | 2,220.54 |
| | Amount used | 1,956.3 |
| 9 | 90% Formic acid | 40.7 |
| 10 | DI Water | 727.3 |
| 11 | DI Water | 1214.5 |

| | | |
|---|---|---|
| ¹ Available from DOW chemical company ² Reaction product of diethylene triamine and methyl isobutyl ketone produced according to the procedure in footnote 3 of Example 2 | | |

Charges 1 through 4 were added to a flask set up for total reflux with stirring under nitrogen. The mixture was heated to a temperature of 132°C and was allowed to exotherm (180°C maximum). The mixture was held for 2 hours and then allowed to cool to 95°C. Charge 5 was added to aid this cooling. At a temperature of 95°C, charges 6 and 7 were added and the mixture was then held at 110°C for one hour. Charge 8 was then added and the reaction mixture held for 15 minutes. 1,956.3 grams of the resulting mixture was then poured into a pre-mixed mixture of deionized water (727.3 g) and 90% formic acid (40.7 g) held at 35°C, and the dispersion was stirred for 1 hour. More deionized water (1,214.5 g) was then added to the dispersion. Methyl isobutyl ketone was removed from the dispersion under vacuum at a temperature of 60-70°C. The resulting cationic amine-functionalized resinous dispersion had a solids content of 45.46% by weight. The solids content was determined by adding a quantity of the dispersion to a tared aluminum dish, recording the weight of the dispersion and dish, heating the test specimen in the dish for 60 minutes at 110°C in an oven, allowing the dish to cool, reweighing the dish to determine the amount of non-volatile content remaining, and determining the solids content by dividing the weight of the non-volatile content by the total sample weight and multiplying by 100.

### EXAMPLE 36

### Preparation of a cationic electrodepositable aqueous resinous dispersion

A cationic electrodepositable aqueous resinous dispersion comprising the cationic amine-functionalized resinous dispersion of Example 35 and a bicyclic guanidine catalyst (1,5,7-triazabicylo[4,4,0]dec-5-ene, referred to as "BCG") containing pigment paste (W9201/N6 commercially available from PPG Industries, Inc.) was prepared by blending together the ingredients listed in the table below as follows: Charge 1 was weighed into a 3.781 (one gallon) plastic container and placed under mild agitation. To this was added 400 grams of Charge 6. Charges 2, 3 and 5 were mixed together in a small beaker and then diluted with a 50 grams of Charge 6 before being added to the agitated bath. The beaker was rinsed with 100 grams of Charge 6 and this rinse was then added to the bath. Charge 4 was diluted with 100 grams of Charge 6 and this mixture was then added to the agitated bath. The beaker was subsequently rinsed with the remainder of Charge 6 and added to the bath. The bath was allowed to stir for 1 hour before coat out. The bath had a solids content of 15% by weight and a pigment to binder ratio of 0.15/1. The composition had a pH of 5.71 and a conductivity of 1075 µS/cm as measured by an Orion STAR A215 pH/conductivity meter from Thermo Scientific. The amount of bicyclic guanidine catalyst incorporated into the aqueous resinous dispersion from the pigment paste was 0.8% by weight of the bicyclic guanidine catalyst, based on the weight of the total resin solids.

| Charge | Ingredients | Amount (g) |
|---|---|---|
| 1 | Resinous dispersion from Example 35 | 547.4 |
| 2 | Polyoxyalkylene-polyepoxide adduct⁵ | 67.9 |
| 3 | Butyl Carbitol formal | 11.6 |
| 4 | Pigment Paste⁶ | 183.7 |
| 5 | 2-butoxy ethanol | 25.0 |
| 6 | Deionized water (total) | 1664.4 |

| | | |
|---|---|---|
| ⁵ As described in Example G of US Pat. No. 4,432,850 ⁶ W9201/N6 cationic gray pigment paste that includes a bicyclic guanidine catalyst (1,5,7-triazabicylo[4,4,0]dec-5-ene) commercially available from PPG Industries, Inc. | | |

### EXAMPLE 37

### Evaluation of cationic electrodepositable aqueous resinous dispersion

The cationic electrodepositable aqueous resinous dispersion of Example 36 was electrophoretically coated onto zinc phosphated cold rolled steel panels (CRS C700 DI APR28630 supplied by ACT). The panels were immersed into a bath containing the cationic electrodepositable aqueous resinous dispersion. Coating conditions were 225 volts for 2 minutes at a bath temperature of 32.2°C (90°F). The coated panels were baked in an electric oven for a period of 30 minutes at various temperatures. The resulting films were smooth and continuous. Cure was evaluated by double acetone rubs testing. The baked panels were rubbed with an acetone soaked WYPALL X80 disposable paper wipe manufactured by Kimberly-Clark. The rubs are counted as a double rub (one rub forward and rub backward constitutes a double rub). The panels are rated on a scale of 0-10 wherein the ratings correspond to the following scale ("Rating Scale 1"):

| Rating | Visual Observation |
|---|---|
| 0 | Breaks through to substrate in less than 10 rubs |
| 1 | Breaks through to substrate in 10-19 rubs |
| 2 | Breaks through to substrate in 20-29 rubs |
| 3 | Breaks through to substrate in 30-39 rubs |
| 4 | Breaks through to substrate in 40-49 rubs |
| 5 | Breaks through to substrate in 50-99 rubs |
| 6 | Heavy mar (100 rubs) |
| 7 | Mar (100 rubs) |
| 8 | Slight mar (100 rubs) |
| 9 | Trace mar (100 rubs) |
| 10 | No effect (100 rubs) |

A panel is considered to be passing, and at least partially cured, if it receives a score of 6 or above. The results are provided in Table 2 below.

**TABLE 2**

| Bake Temperature | | Initial Film Build in µm (mils) | 100 Double Acetone Rubs | Film Loss following rubs in µm (mils) | Rating |
|---|---|---|---|---|---|
| (°F) | (°C) | | | | |
| 230 | 110 | 29.21 (1.15) | FAIL (80 rubs) | --- | 5 |
| 240 | 115.6 | 29.72 (1.17) | PASS heavy mar | 9.65 (0.38) | 6 |
| 250 | 121.1 | 29.21 (1.15) | PASS heavy mar | 5.56 (0.22) | 6 |
| 265 | 129.4 | 26.92 (1.06) | PASS no effect | 0.25 (0.01) | 10 |
| 275 | 135 | 27.43 (1.08) | PASS no effect | 1.27 (0.05) | 10 |
| 300 | 148.9 | 26.16 (1.03) | PASS no effect | 0 (0) | 10 |

### EXAMPLE 38

### Preparation of a comparative cationic electrodepositable aqueous resinous dispersion

A comparative cationic electrodepositable aqueous resinous dispersion comprising the cationic amine-functionalized resinous dispersion of Example 35 and a dibutyl tin oxide catalyst containing pigment paste (E6448 commercially available from PPG Industries, Inc.) was prepared by blending together the ingredients listed in the table below as follows: Charge 1 was weighed into a 3.781 (one gallon) plastic container and placed under mild agitation. To this was added 800 grams of Charge 6. Charges 2, 3 and 5 were mixed together in a small beaker and then diluted with 50 grams of Charge 6 before being added to the agitated bath. The beaker was rinsed with 100 grams of Charge 6 and this rinse was then added to the bath. Charge 4 was diluted with 10 grams of Charge 6 and this mixture was then added to the agitated bath. The beaker was subsequently rinsed with the remainder of Charge 6 and added to the bath. The bath was allowed to stir for 1 hour before coat out. The resulting bath had a solids content of 15% by weight and a pigment to binder ratio of 0.15/1. The composition had a pH of 5.94 and a conductivity of 1255 µS/cm as measured by an Orion STAR A215 pH/conductivity meter from Thermo Scientific. The amount of tin catalyst incorporated into the aqueous resinous dispersion from the pigment paste was 1% by weight of tin metal from the dibutyl tin oxide catalyst, based on the weight of the total resin solids.

| Charge | Ingredients | Amount (g) |
|---|---|---|
| 1 | Resinous dispersion from Example 35 | 573.6 |
| 2 | Polyoxyalkylene-polyepoxide adduct⁷ | 88.9 |
| 3 | Butyl Carbitol formal | 12.2 |
| 4 | Pigment paste⁸ | 125.1 |
| 5 | 2-butoxy ethanol | 25.0 |
| 6 | Deionized water (total) | 1675.2 |

| | | |
|---|---|---|
| ⁷ As described in Example G of US Pat. No. 4,432,850 ⁸ E6448 cationic gray paste that includes dibutyltin oxide catalyst available from PPG Industries, Inc. | | |

### EXAMPLE 39

### Evaluation of comparative cationic electrodepositable aqueous resinous dispersion

The composition of Example 38 was electrophoretically coated onto zinc phosphated cold rolled steel panels (CRS C700 DI APR28630 supplied by ACT). The panels were immersed into a bath containing the cationic electrodepositable aqueous resinous dispersion. A coating electrodeposition time of 2 minutes was used for all coat outs and the bath was maintained at a temperature of 32.2°C (90°F). Coat out voltage was varied to give final film thicknesses following bake between 23.1 to 26.92 µm (0.91 to 1.06 mils). Coated panels were baked in an electric oven for 30 minutes at various temperatures. The resulting films were smooth, continuous and defect free. Cure was evaluated by double acetone rubs testing by the same procedure discussed above. The results are provided in Table 3.

**TABLE 3**

| Coat Out Voltage | Bake Temperature | | Initial Film Build in µm (mils) | 100 Double Acetone Rubs | Film Loss following rubs in µm (mils) | Rating |
|---|---|---|---|---|---|---|
| | (°F) | (°C) | | | | |
| 160V | 250 | 121.1 | 26.92 (1.06) | FAIL (5 rubs) | --- | 0 |
| 165V | 275 | 135 | 24.38 (0.96) | FAIL (80 rubs) | --- | 5 |
| 165V | 285 | 140.6 | 23.37 (0.92) | PASS no effect | 0(0) | 10 |
| 170V | 300 | 148.9 | 23.11 (0.91) | PASS no effect | 0(0) | 10 |

The results shown in Table 3 show that the electrodepositable aqueous resinous dispersion that included dibutyl tin oxide catalyst did not pass the 100 Double Acetone Rubs test until a bake temperature of 140.6°C (285°F). Accordingly, the electrodepositable aqueous resinous dispersion that included dibutyl tin oxide catalyst was not at least partially cured until it was baked at that temperature. In contrast, the results shown in Table 2 show that the electrodepositable aqueous resinous dispersion that included a bicyclic guanidine catalyst passed the 100 Double Acetone Rubs test at a bake temperature of 115.6°C (240°F) and show no damage at a bake temperature of 129.4°C (265°F). These results indicate that the electrodepositable aqueous resinous dispersion of Example 36 that include a blocked polyisocyanate comprising a racemic lactamide blocking group and a bicyclic guanidine catalyst achieved curing temperatures that were significantly reduced.

### EXAMPLES 40-43

### Preparation of Solventborne Coating Compositions

| | Amount (g) | | | |
|---|---|---|---|---|
| Ingredient | Example 40 | Comparative Example 41 | Comparative Example 42 | Comparative Example 43 |
| N-butylglycolamide blocked polyisocyanate curing agent prepared in Example 4 | 19.80 | 19.80 | - | - |
| Polyisocyanate Curing agent (10/2/8 MDI/Butyl Carbitol/Butyl Cellosolve)¹ | - | - | 10.14 | 10.14 |
| MIBK | 8.00 | 8.00 | 9.75 | 9.75 |
| JEFFAMINE^{®} T-403 | 5.67 | 5.67 | 5.67 | 5.67 |
| 1,5,7-triazabicylo[4,4,0]dec-5-ene catalyst | 0.41 | - | 0.31 | - |
| Non-volatile content of composition (% by weight) | 57.64% | 57.88% | 57.65% | 57.89% |

| | | | | |
|---|---|---|---|---|
| ¹ Prepared as described in Table 1 of U.S. Pat. No. 5,630,922 (90% non-volatile). | | | | |

Each solventbome coating composition of Examples 40-43 were prepared by combining the ingredients in the amounts provided in the above table according to the following procedure. The blocked polyisocyanate curing agent was combined with methyl isobutyl ketone in a 56.7 g (2 ounce) glass jar and was mixed with a spatula for about 5 minutes. A tri-primary amino functional polyethermine (JEFFAMINE^{®} T-403, available from Huntsman Corporation) was then added, and the mixture was stirred an additional 2 to 3 minutes. For examples 40 and 42, the 1,5,7-triazabicylo[4,4,0]dec-5-ene catalyst (referred to as "BCG") was added and the mixture was stirred an additional 2 to 3 minutes. The coating compositions were formulated to have a 1:1 ratio of primary amino group from the polyetheramine to isocyanato groups from the blocked polyisocyanate.

### EXAMPLE 44

### Evaluation of Solventborne Coating Compositions

Each of the coating compositions of Examples 40-43 were drawndown on zinc phosphated cold rolled steel panels (CRS C710 DI APR31985 supplied by ACT) using a 76.2 µm (3mil (0.003 inch)) bird bar. The coated panels were subsequently baked in a forced air electric oven for a period of 30 minutes at various temperatures. The resulting films were smooth and continuous. Cure was evaluated by double acetone rubs testing. The baked panels were rubbed with an acetone soaked WYPALL X80 disposable paper wipe manufactured by Kimberly-Clark. The rubs are counted as a double rub (one rub forward and rub backward constitutes a double rub). The panels are rated on a scale of 0-10 wherein the ratings correspond to the rating provided in Rating Scale 1 above. A panel is considered to be passing, and at least partially cured, if it receives a score of 6 or above. The results are provided in Table 4 below.

**TABLE 4**

| | Rating | | | |
|---|---|---|---|---|
| Bake temperature (°C for 30 minutes) | Example 40 (BGA/BCG) | Comparative Example 41 (BGA/No catalyst) | Comparative Example 42 (Comp./BCG) | Comparative Example 43 (Comp./No catalyst) |
| 107 | 5 | 2 | 0 | 0 |
| 121 | 7 | 2 | 2 | 0 |
| 135 | 9 | 2 | 10 | 0 |
| 149 | 9 | 8 | - | 0 |
| 163 | - | - | - | 0 |
| 177 | - | - | - | 1 |
| 191 | - | - | - | 6 |

As demonstrated in Table 4, the combination of the glycolamide blocked polyisocyanate curing agent and guanidine curing catalyst in Example 40 resulted improved cure performance. Example 40 achieved acceptable cure performance at 121°C. Comparative Example 41, which included the butylglycolamide blocked polyisocyanate curing agent but no curing catalyst, achieved acceptable cure performance at 149°C, while Comparative Example 42, which included a blocked polyisocyanate having conventional blocking groups and the guanidine catalyst, achieved an acceptable cure performance at 135°C. Comparative Example 43 did not achieve acceptable cure performance until a bake temperature of 191°C was reached. These results demonstrate the synergistic effect resulting from the combination of the glycolamide blocked polyisocyanate curing agent and guanidine curing catalyst.

## Claims

1. A coating composition comprising:
a film-forming polymer comprising active hydrogen-containing functional groups;
a blocked polyisocyanate curing agent comprising a blocking group derived from a blocking agent comprising an alpha-hydroxy amide, ester or
thioester; and
a curing catalyst that does not contain tin, lead, iron, zinc or manganese,
wherein the curing catalyst comprises a guanidine or a bismuth-containing curing catalyst and
wherein the film-forming polymer comprises an active hydrogen-containing, cationic salt group-containing film-forming polymer.

2. The coating composition of Claim 1, wherein the film-forming polymer comprising active hydrogen-containing functional groups further comprises the residue of a ketimine.

3. The coating composition of Claim 1, wherein the blocking agent comprising alpha-hydroxy amide, ester or thioester, comprises a compound of the structure: 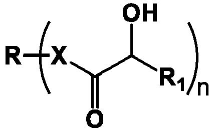 wherein X is N(R₂), O, S; n is 1 to 4; when n = 1 and X = N(R₂), R is hydrogen, a C₁ to C₁₀ alkyl group, an aryl group, a polyether, a polyester, a polyurethane, a hydroxy-alkyl group, or a thio-alkyl group; when n = 1 and X = O or S, R is a C₁ to C₁₀ alkyl group, an aryl group, a polyether, a polyester, a polyurethane, a hydroxy-alkyl group, or a thio-alkyl group; when n = 2 to 4, R is a multi-valent C₁ to C₁₀ alkyl group, a multi-valent aryl group, a multi-valent polyether, a multi-valent polyester, a multi-valent polyurethane; each R₁ is independently hydrogen, a C₁ to C₁₀ alkyl group, an aryl group, or a cycloaliphatic group; each R₂ is independently hydrogen, a C₁ to C₁₀ alkyl group, an aryl group, a cycloaliphatic group, a hydroxy-alkyl group, or a thio-alkyl group; and R and R₂ together can form a cycloaliphatic, heterocyclic structure.

4. The coating composition of Claim 1, wherein the blocking agent comprises an alpha-hydroxy amide blocking agent, wherein the alpha-hydroxy amide blocking agent preferably comprises an alkyl glycolamide and/or an alkyl lactam ide.

5. The coating composition of Claim 4, wherein the alkyl glycolamide or the alkyl lactamide comprise a compound of the structure: 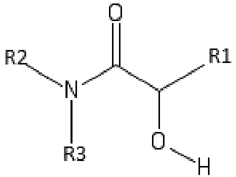 wherein R1 is hydrogen or a methyl group; R2 is a C₁ to C₁₀ alkyl group; and R3 is hydrogen or a C₁ to C₁₀ alkyl group.

6. The coating composition of Claim 4, wherein the alkyl glycolamide comprises a C₁ to C₁₀ mono-alkyl glycolamide, and/or wherein the alkyl lactamide comprises a C₁ to C₁₀ mono-alkyl lactamide, or a racemic lactam ide.

7. The coating composition of Claim 4, wherein the blocking group derived from the alpha-hydroxy amide, ester or thioester blocking agent comprise at least 10% of the total blocked isocyanato groups of the blocked polyisocyanate.

8. The coating composition of Claim 1, wherein the curing catalyst comprises a guanidine, wherein the guanidine preferably comprises a bicyclic guanidine.

9. The coating composition of Claim 1, wherein the curing catalyst comprises a bismuth-containing curing catalyst, and/or wherein the coating composition is substantially free of tin-containing catalyst.

10. The coating composition of Claim 1, wherein the coating composition cures at a temperature of 130°C or less, as measured according to DOUBLE RUB TEST METHOD, or wherein the coating composition cures at a temperature of 139°C or less, as measured according to TGA METHOD.

11. The coating composition of Claim 1, wherein the blocked polyisocyanate comprises a second blocking group derived from a blocking agent comprising an alcohol, a phenolic compound, a tertiary hydroxyl amine, an oxime, an amine, or a mixture or combination of any of the foregoing, or wherein the blocked polyisocyanate comprises a blocked aromatic polyisocyanate.

12. A method of coating a substrate comprising applying the coating composition of Claim 1 to at least a portion of the substrate, wherein the coating composition of Claim 1 is preferably applied to the substrate by electrodeposition.

13. A coating formed by at least partially curing the coating composition of Claim 1.

14. A substrate coated with the coating composition of Claim 1 in an at least partially cured state.

15. A coating composition comprising:
a film-forming polymer comprising active hydrogen-containing functional groups;
a blocked polyisocyanate curing agent according to structure: 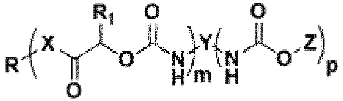
wherein Y represents a multi-valent organic moiety; m ≥ 1; and p ≥ 0; X is N(R₂), O, S; when X = N(R₂), R is hydrogen, a C₁ to C₁₀ alkyl group, an aryl group, a polyether, a polyester, a polyurethane, a hydroxy-alkyl group, or a thio-alkyl group; when X = O or S, R is a C₁ to C₁₀ alkyl group, an aryl group, a polyether, a polyester, a polyurethane, a hydroxy-alkyl group, or a thio-alkyl group; each R₁ is independently hydrogen, a C₁ to C₁₀ alkyl group, an aryl group, or a cycloaliphatic group; when m ≥ 2, R is optionally a multi-valent C₁ to C₁₀ alkyl group, a multi-valent aryl group, a multi-valent polyether, a multi-valent polyester, a multi-valent polyurethane; each R₂ is independently hydrogen, a C₁ to C₁₀ alkyl group, an aryl group, a cycloaliphatic group, a hydroxy-alkyl group, or a thio-alkyl group; R and R₂ together can form a cycloaliphatic, heterocyclic structure; and O-Z represents the residue of a second blocking agent; and
a curing catalyst that does not contain tin, lead, iron, zinc or manganese, wherein the curing catalyst comprises a guanidine or a bismuth-containing curing catalyst, and
wherein the film-forming polymer comprises an active hydrogen-containing, cationic salt group-containing film-forming polymer.

## Patentansprüche

1. Eine Beschichtungszusammensetzung umfassend:
ein filmbildendes Polymer umfassend aktiven Wasserstoff enthaltende funktionelle Gruppen;
ein blockiertes Polyisocyanat-Härtungsmittel umfassend eine Blockierungsgruppe abgeleitet von einem Blockierungsmittel umfassend ein alpha-Hydroxyamid, -ester oder -thioester; und
einen Härtungskatalysator, der kein Zinn, Blei, Eisen, Zink oder Mangan enthält, wobei der Härtungskatalysator ein Guanidin oder einen Bismuth enthaltenden Härtungskatalysator umfasst, und
wobei das filmbildende Polymer ein aktiven Wasserstoff enthaltendes, kationische Salzgruppen enthaltendes filmbildendes Polymer umfasst.

2. Die Beschichtungszusammensetzung des Anspruchs 1, wobei das filmbildende Polymer umfassend aktiven Wasserstoff enthaltende funktionelle Gruppen des Weiteren den Rückstand eines Ketimins umfasst.

3. Die Beschichtungszusammensetzung des Anspruchs 1, wobei das Blockierungsmittel umfassend alpha-Hydroxyamid, -ester oder -thioester eine Verbindung der Struktur: 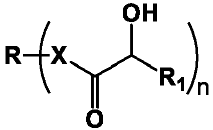 umfasst, wobei X N(R₂), O oder S ist; n 1 bis 4 ist; wenn n = 1 und X = N(R₂) ist, R Wasserstoff, eine C₁-C₁₀-Alkylgruppe, eine Arylgruppe, ein Polyether, ein Polyester, ein Polyurethan, eine Hydroxyalkylgruppe oder eine Thioalkylgruppe ist; wenn n = 1 und X = O oder S ist, R eine C₁-C₁₀-Alkylgruppe, eine Arylgruppe, ein Polyether, ein Polyester, ein Polyurethan, eine Hydroxyalkylgruppe oder eine Thioalkylgruppe ist; wenn n = 2 bis 4, R eine multi-valente C₁-C₁₀-Alkylgruppe, eine multi-valente Arylgruppe, ein multivalenter Polyether, ein multivalenter Polyester, ein multivalentes Polyurethan ist; jedes R₁ unabhängig Wasserstoff, eine C₁-C₁₀-Alkylgruppe, eine Arylgruppe, oder eine cycloaliphatische Gruppe ist; jedes R₂ unabhängig Wasserstoff, eine C₁-C₁₀-Alkylgruppe, eine Arylgruppe, eine cycloaliphatische Gruppe, eine Hydroxyalkylgruppe oder eine Thioalkylgruppe ist; und R und R₂ zusammengenommen eine cycloaliphatische, heterocyclische Struktur bilden können.

4. Die Beschichtungszusammensetzung des Anspruchs 1, wobei das Blockierungsmittel ein alpha-Hydroxyamidblockierungsmittel umfasst, wobei das alpha-Hydroxyamidblockierungsmittel vorzugsweise ein Alkylglykolamid und/oder ein Alkyllactamid umfasst.

5. Die Beschichtungszusammensetzung des Anspruchs 4, wobei das Alkylglykolamid oder das Alkyllactamid eine Verbindung der Struktur: 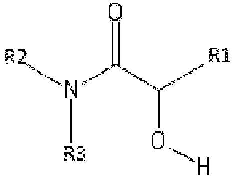 umfasst, wobei R1 Wasserstoff oder eine Methylgruppe ist; R2 eine C₁-C₁₀-Alkylgruppe ist; und R3 Wasserstoff oder eine C₁-C₁₀-Alkylgruppe ist.

6. Die Beschichtungszusammensetzung des Anspruchs 4, wobei das Alkylglykolamid ein C₁-C₁₀-Monoalkylglykolamid umfasst und/oder wobei das Alkyllactamid ein C₁-C₁₀-Monoalkyllactamid oder ein racemisches Lactamid umfasst.

7. Die Beschichtungszusammensetzung des Anspruchs 4, wobei die Blockierungsgruppe abgeleitet von dem alpha-Hydroxyamid, Ester- oder Thioesterblockierungsmittel wenigstens 10% der gesamten blockierten Isocyanatgruppen des blockierten Polyisocyanats umfasst.

8. Die Beschichtungszusammensetzung des Anspruchs 1, wobei der Härtungskatalysator ein Guanidin umfasst, wobei das Guanidin vorzugsweise ein bicyclisches Guanidin umfasst.

9. Die Beschichtungszusammensetzung des Anspruchs 1, wobei der Härtungskatalysator einen Bismuth enthaltenden Härtungskatalysator umfasst und/oder wobei die Beschichtungszusammensetzung im Wesentlichen frei von zinnhaltigem Katalysator ist.

10. Die Beschichtungszusammensetzung des Anspruchs 1, wobei die Beschichtungszusammensetzung bei einer Temperatur von 130 °C oder weniger härtet, wie gemäß dem Doppelrieb-Testverfahren gemessen, oder wobei die Beschichtungszusammensetzung bei einer Temperatur von 139 °C oder weniger härtet, wie gemäß dem TGA-Verfahren gemessen.

11. Die Beschichtungszusammensetzung des Anspruchs 1, wobei das blockierte Polyisocyanat eine zweite Blockierungsgruppe abgeleitet von einem Blockierungsmittel umfassend einen Alkohol, eine phenolische Verbindung, ein tertiäres Hydroxylamin, ein Oxim, ein Amin oder eine Mischung oder Kombination von jeglichen der Vorstehenden umfasst, oder wobei das blockierte Polyisocyanat ein blockiertes aromatisches Polyisocyanat umfasst.

12. Ein Verfahren zum Beschichten eines Substrats umfassend ein Aufbringen der Beschichtungszusammensetzung des Anspruchs 1 auf wenigstens einen Teil des Substrats, wobei die Beschichtungszusammensetzung des Anspruchs 1 vorzugsweise durch Elektroabscheidung auf dem Substrat aufgebracht wird.

13. Eine Beschichtung, die durch wenigstens teilweises Härten der Beschichtungszusammensetzung des Anspruchs 1 gebildet wird.

14. Ein Substrat, beschichtet mit der Beschichtungszusammensetzung des Anspruchs 1 in einem wenigstens teilweise gehärteten Zustand.

15. Eine Beschichtungszusammensetzung umfassend:
ein filmbildendes Polymer umfassend aktiven Wasserstoff enthaltende funktionelle Gruppen;
ein blockiertes Polyisocyanathärtungsmittel gemäß der Struktur: 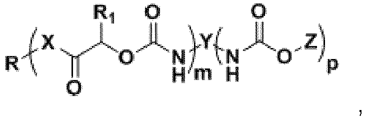
wobei Y eine multivalente organische Struktureinheit darstellt; m ≥ 1; und p ≥ 0; X N(R₂), O, S ist; wenn X = N(R₂), ist R Wasserstoff, eine C₁-C₁₀-Alkylgruppe, eine Arylgruppe, ein Polyether, ein Polyester, ein Polyurethan, eine Hydroxyalkylgruppe oder eine Thioalkylgruppe ist; wenn x = O oder S ist, ist R eine C₁-C₁₀-Alkylgruppe, eine Arylgruppe, ein Polyether, ein Polyester, ein Polyurethan, eine Hydroxyalkylgruppe oder eine Thioalkylgruppe; jedes R₁ ist unabhängig Wasserstoff, eine C₁-C₁₀-Alkylgruppe, eine Arylgruppe oder eine cycloaliphatische Gruppe; wenn m ≥ 2, ist R wahlweise eine multivalente C₁-C₁₀-Alkylgruppe, eine multivalente Arylgruppe, ein multivalenter Polyether, ein multivalenter Polyester, ein multivalentes Polyurethan; jedes R₂ ist unabhängig Wasserstoff, eine C₁-C₁₀-Alkylgruppe, eine Arylgruppe, eine cycloaliphatische Gruppe, eine Hydroxyalkylgruppe oder eine Thioalkylgruppe; R und R₂ zusammengenommen eine cycloaliphatische, heterocyclische Struktur bilden können; und O-Z stellt den Rest von einem zweiten Blockierungsmittel dar; und
einen Härtungskatalysator, der kein Zinn, Blei, Eisen, Zink oder Mangan enthält, wobei der Härtungskatalysator ein Guanidin oder einen Bismuth enthaltenden Härtungskatalysator umfasst, und
wobei das filmbildende Polymer ein aktiven Wasserstoff enthaltendes kationische Salzgruppen enthaltendes filmbildendes Polymer umfasst.

## Revendications

1. Composition de revêtement comprenant :
un polymère filmogène comprenant des groupes fonctionnels contenant de l'hydrogène actif ;
un agent de durcissement de type polyisocyanate bloqué comprenant un groupe bloquant dérivé d'un agent bloquant comprenant un alpha-hydroxyamide, ester ou thioester ; et
un catalyseur de durcissement qui ne contient pas d'étain, de plomb, de fer, de zinc ni de manganèse ; et
dans laquelle le catalyseur de durcissement comprend une guanidine ou un catalyseur contenant du bismuth et
dans laquelle le polymère filmogène comprend un polymère filmogène contenant un groupe sel cationique, contenant de l'hydrogène actif.

2. Composition de revêtement selon la revendication 1, dans laquelle le polymère filmogène comprenant des groupes fonctionnels contenant de l'hydrogène actif comprend en outre le résidu d'une cétimine.

3. Composition de revêtement selon la revendication 1, dans laquelle l'agent bloquant comprenant un alpha-hydroxyamide, ester ou thioester comprend un composé de structure : 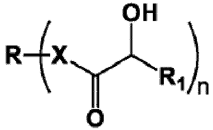 dans laquelle X est N(R₂), O, S ; n vaut de 1 à 4 ; lorsque n = 1 et X = N(R₂), R est un atome d'hydrogène, un groupe alkyle en C₁-C₁₀, un groupe aryle, un polyéther, un polyester, un polyuréthane, un groupe hydroxy-alkyle, ou un groupe thio-alkyle ; lorsque n = 1 et X = O ou S, R est un groupe alkyle en C₁-C₁₀, un groupe aryle, un polyéther, un polyester, un polyuréthane, un groupe hydroxy-alkyle, ou un groupe thio-alkyle ; lorsque n = 2 à 4, R est un groupe alkyle en C₁-C₁₀ multivalent, un groupe aryle multivalent, un polyéther multivalent, un polyester multivalent, un polyuréthane multivalent ; chaque radical R₁ est indépendamment un atome d'hydrogène, un groupe alkyle en C₁-C₁₀, un groupe aryle, ou un groupe cycloaliphatique ; chaque radical R₂ est indépendamment un atome d'hydrogène, un groupe alkyle en C₁-C₁₀, un groupe aryle, un groupe cycloaliphatique, un groupe hydroxy-alkyle, ou un groupe thio-alkyle ; et R et R₂ ensemble peuvent former une structure cycloaliphatique, hétérocyclique.

4. Composition de revêtement selon la revendication 1, dans laquelle l'agent bloquant comprend un agent bloquant alpha-hydroxyamide, l'agent bloquant alpha-hydroxyamide comprenant de préférence un alkyl-glycolamide et/ou un alkyl-lactamide.

5. Composition de revêtement selon la revendication 4, dans laquelle l'alkyl-glycolamide ou l'alkyl-lactamide comprend un composé de structure : 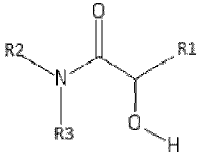 dans laquelle R1 est un atome d'hydrogène ou un groupe méthyle ; R2 est un groupe alkyle en C₁-C₁₀ ; et R3 est un atome d'hydrogène ou un groupe alkyle en C₁-C₁₀.

6. Composition de revêtement selon la revendication 4, dans laquelle l'alkyl-glycolamide comprend un monoalkyl(C₁-C₁₀)glycolamide et/ou dans laquelle l'alkyl-lactamide comprend un monoalkyl(C₁-C₁₀)lactamide ou un lactamide racémique.

7. Composition de revêtement selon la revendication 4, dans laquelle le groupe bloquant dérivé de l'agent bloquant alpha-hydroxyamide, ester ou thioester constitue au moins 10 % de la totalité des groupes isocyanato bloqués du polyisocyanate bloqué.

8. Composition de revêtement selon la revendication 1, dans laquelle le catalyseur de durcissement comprend une guanidine, la guanidine comprenant de préférence une guanidine bicyclique.

9. Composition de revêtement selon la revendication 1, dans laquelle le catalyseur de durcissement comprend un catalyseur de durcissement contenant du bismuth, et/ou dans laquelle la composition de revêtement est essentiellement exempte de catalyseur contenant de l'étain.

10. Composition de revêtement selon la revendication 1, dans laquelle la composition de revêtement durcit à une température de 130 °C ou moins, telle que mesurée selon la méthode de test de double frottement DOUBLE RUB TEST, ou dans laquelle la composition de revêtement durcit à une température de 139 °C ou moins, telle que mesurée selon la méthode TGA.

11. Composition de revêtement selon la revendication 1, dans laquelle le polyisocyanate bloqué comprend un deuxième groupe bloquant dérivé d'un agent bloquant comprenant un alcool, un composé phénolique, une hydroxylamine tertiaire, une oxime, une amine ou un mélange ou une combinaison de n'importe lesquels des précédents, ou dans laquelle le polyisocyanate bloqué comprend un polyisocyanate aromatique bloqué.

12. Procédé de revêtement d'un subjectile, comprenant l'application de la composition de composition de revêtement selon la revendication 1 sur au moins une partie du subjectile, la composition de revêtement selon la revendication 1 étant appliquée sur le subjectile de préférence par électrodéposition.

13. Revêtement formé par durcissement au moins partiel de la composition de revêtement selon la revendication 1.

14. Subjectile revêtu avec la composition de revêtement selon la revendication 1 en un état au moins partiellement durci.

15. Composition de revêtement comprenant :
un polymère filmogène comprenant des groupes fonctionnels contenant de l'hydrogène actif ;
un agent de durcissement de type polyisocyanate bloqué conforme à la structure : 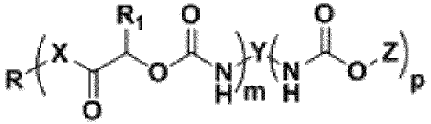 dans laquelle Y représente un groupement organique multivalent ; m est ≥ 1 ; et p est ≥ 0 ; X est N(R₂), O, S ; lorsque X = N(R₂), R est un atome d'hydrogène, un groupe alkyle en C₁-C₁₀, un groupe aryle, un polyéther, un polyester, un polyuréthane, un groupe hydroxy-alkyle, ou un groupe thio-alkyle ; lorsque X = O ou S, R est un groupe alkyle en C₁-C₁₀, un groupe aryle, un polyéther, un polyester, un polyuréthane, un groupe hydroxy-alkyle, ou un groupe thio-alkyle ; chaque radical R₁ est indépendamment un atome d'hydrogène, un groupe alkyle en C₁-C₁₀, un groupe aryle, ou un groupe cycloaliphatique ; lorsque m est ≥ 2, R est en option un groupe alkyle en C₁-C₁₀ multivalent, un groupe aryle multivalent, un polyéther multivalent, un polyester multivalent, un polyuréthane multivalent ; chaque radical R₂ est indépendamment un atome d'hydrogène, un groupe alkyle en C₁-C₁₀, un groupe aryle, un groupe cycloaliphatique, un groupe hydroxy-alkyle, ou un groupe thio-alkyle ; R et R₂ ensemble peuvent former une structure cycloaliphatique, hétérocyclique, et O-Z représente le résidu d'un deuxième agent bloquant ; et
un catalyseur de durcissement qui ne contient pas d'étain, de plomb, de fer, de zinc ni de manganèse ; et
dans laquelle le catalyseur de durcissement comprend une guanidine ou un catalyseur contenant du bismuth et
dans laquelle le polymère filmogène comprend un polymère filmogène contenant un groupe sel cationique, contenant de l'hydrogène actif.
